(19) **Europäisches Patentamt / European Patent Office / Office européen des brevets**

(11) **EP 1 466 136 B1**

(12) **EUROPEAN PATENT SPECIFICATION**

(45) Date of publication and mention
of the grant of the patent:
**03.08.2011 Bulletin 2011/31**

(51) Int Cl.:
**G01B 11/03** (2006.01)    **G01S 17/42** (2006.01)

(21) Application number: **02720805.7**

(22) Date of filing: **16.01.2002**

(86) International application number:
**PCT/US2002/001346**

(87) International publication number:
**WO 2003/062744 (31.07.2003 Gazette 2003/31)**

(54) **LASER-BASED COORDINATE MEASURING DEVICE AND LASER-BASED METHOD FOR MEASURING COORDINATES**

**LASERGESTÜTZTE KOORDINATENMESSAPPARATUR UND LASERGESTÜTZTES KOORDINATENMESSVERFAHREN**

**DISPOSITIF ET PROCEDE DE MESURE DE COORDONNEES PAR LASER**

(84) Designated Contracting States:
**AT BE CH CY DE DK ES FI FR GB GR IE IT LI LU MC NL PT SE TR**

(43) Date of publication of application:
**13.10.2004 Bulletin 2004/42**

(60) Divisional application:
**10012367.8 / 2 275 775**

(73) Proprietor: **Faro Technologies, Inc.**
**Lake Mary, FL 32746 (US)**

(72) Inventors:
• **BRIDGES, Robert, E.**
**Kennett Square, PA 19348 (US)**
• **BROWN, Lawrence, B.**
**Cochranville, PA 19330 (US)**
• **WEST, James, K.**
**Landenberg, PA 19350 (US)**
• **ACKERSON, Scott, D.**
**Kennett Square, PA 19348 (US)**

(74) Representative: **Leckey, David Herbert**
**Dehns**
**St Bride's House**
**10 Salisbury Square**
**London**
**EC4Y 8JD (GB)**

(56) References cited:
**GB-A- 2 285 550    US-A- 5 198 874**
**US-A- 5 973 788**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

The present invention relates to a laser based measuring device and a laser based method of measuring coordinates.

Discussion of the Related Art

There is a class of instrument that measures the coordinates of a point by sending a laser beam to a retroreflector target that is in contact with the point. The instrument determines coordinates by measuring the distance and the two angles to the retroreflector target. There is another class of instrument that is capable of measuring the three orientation angles (pitch, yaw, and roll) of a retroreflector target. If such an instrument can also measure the three coordinates of a point in space, it is said to measure six degrees of freedom. However, such six degree-of-freedom systems, whether or not they are employing laser techniques, are generally inaccurate, slow, limited in radial or angular range, and/or expensive. Exemplary systems for determining position (three to six degrees of freedom) are described by U.S. Patent No. 4,790,651 to Brown et al.; U.S. Patent No. 4,714,339 to Lau et al.; U.S. Patent No. 5,059,789 to Salcudean; U.S. Patent No. 5,367,373 to Busch-Vishniac et al.; U.S. Patent No. 5,973,788 to Pettersen et al.; and U.S. Patent No. 5,267,014 to Prenninger, et al.

The laser tracker is a particular type of coordinate-measuring device that tracks the retroreflector target with one or more laser beams it emits. To provide a beam-steering mechanism for this tracking function, laser trackers conventionally include a stationary base onto which a rotating stage or platform is mounted. Until now, most laser trackers have used optical elements, such as mirrors or prisms, to steer the laser beam from its source in the base to optics in the rotating stage and through or off those optics toward the retroreflector. These optical elements and their mounts are costly. Also, they are subject to tilting and bending as a result of thermal and/or mechanical stresses that are usually present in tracker work environments. The consequence of these stresses is reduced accuracy and stability. Examples of beam-steering laser trackers are described by Lucy, et al., Applied Optics, pp. 517-524, 1966; Bernard and Fencil, Applied Optics, pp. 497-505, 1966; Sullivan, SPIE, Vol. 227, pp. 148-161, 1980; U.S. Patent No. 4,020,340 to Cooke; U.S. Patent No. 4,025,193 to Pond; U.S. Patent No. 4,386,848 to Clendenin et al.; U.S. Patent No. 4,436,417 to Hutchin; U.S. Patent No. 4,457,625 to Greenleaf et al.; U.S. Patent No. 4,714,339 to Lau et al.; U.S. Patent No. 4,721,385 to Jelalian et al.; German Patent DE 3205362 Al to Pfeifer et al. An example of a beam-steering mechanism that uses prismatic optical elements is described by U.S. Patent No. 4,790,651 Brown et al.

A device that is closely related to a laser tracker is the laser scanner. The laser scanner steps one or more laser beams to points on a diffuse surface. The laser tracker and laser scanner are both coordinate-measuring devices. It is common practice today to use the term laser tracker to also refer to laser scanner devices having distance- and angle-measuring capability. This broad definition of laser tracker, which includes laser scanners, is used throughout this application.

An alternative to steering the laser beam with a mirror or prism is to launch the laser beam from an optical fiber mounted on a rigid platform. Although such devices have been built, none has taken full advantage of the simplicity, stability, and flexibility possible with such an approach. For example, such systems usually require separate optical fibers for transmitting and receiving the laser light. An exemplary system that tracks a laser beam launched from an optical fiber is described in Nakamura, et al., Review of Scientific Instruments, pp. 1006-1011, 1994; Takatsuji et al., Measurement Science & Technology, pp. 38-41, 1998; Takatsuji, et al., Measurement Science & Technology, pp. 1357-1359, 1998; and Takatsuji, et al., Dimensional Metrology in the 21s1 Century, International Dimensional Metrology Workshop sponsored by Oak Ridge Metrology Center, May 10-13, 1999 Non-tracking systems that launch laser beams from optical fibers are numerous in the prior art and include U.S. Patent No. 4,459,022 to Morey; U.S. Patent No. 5,095,472 to Uchino, et al.; U.S. Patent No. 5,198,874 to Bell et al.; U.S. Patent No. 5,200,838 to Nudelman; U.S. Patent No. 5,402,230 to Tian, et al.; U.S. Patent No. 5,508,804 to Furstenau; and U.S. Patent No. 5,557,406 to Taylor

An optical coordinate measuring system having the features of one preamble of claim is disclosed in GB-A-2285550.

SUMMARY OF THE INVENTION

Accordingly, the present invention is directed to a laser-based coordinate measuring device that substantially obviates one or more of the problems due to limitations and disadvantages of the related art.

An object of the present invention is to provide a laser-based coordinate measuring device with improved laser beam steering, six degree of freedom measurements, and capability to locate multiple retroreflectors distributed throughout large volumes.

Another object of the present invention is to provide a reliable laser-based coordinate measuring device that is easily manufactured at a low cost without complex beam-steering optics.

Additional features and advantages of the invention will be set forth in the description that follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, a laser based measuring device for measuring a position of a remote target comprising a stationary portion having at least a first laser radiation source and at least a first optical detector;a rotable portion that is rotable with respect to the stationaryportion; a first motor disposed to rotate the rotatable portion about a first axis; and at least a first optical fiber system for optically interconnecting the first laser radiation source and the first optical detector with an emission end of an optical fiber of the first optical fiber system, the emission end of the optical fiber disposed on the rotatable portion for emitting laser radiation to the remote target and for receiving laser radiation reflected from the remote target, wherein the emission end of the optical fiber is disposed on the rotatable portion and an emission direction of the laser radiation is controlled according to the rotation of the rotatable portion.

In another aspect, a laser based method for measuring coordinates of a remote retroreflective target comprises the steps of coupling laser radiation into a first end of an optical fiber, the optical fiber having a second end disposed on a rotatable structure; controlling the rotation of the rotatable structure to direct the laser radiation from the second end to the remote retroreflective target; coupling a first portion of retroreflected laser radiation with an orientation camera arranged to determine the orientation of the remote target; coupling a second portion of the retroreflected laser radiation with a distance meter; and calculating three positional and three orientational degrees of freedom of the remote retroreflective target.

It is to be understood that both the foregoing general description and the following detailed description are exemplary and explanatory and are intended to provide further explanation of the invention as claimed.

BRIEF DESCRIPTION OF THE DRAWINGS

The accompanying drawings, which are included to provide a further understanding of the invention and are incorporated in and constitute a part of this specification, illustrate embodiments of the invention. In the drawings:

Figure 1 depicts an embodiment of a laser tracker according to the present invention with a beam-steering mechanism and six degree-of-freedom measurement capability;

Figure 2 depicts in block form the major components of a rigid structure of the laser tracker of Figure 1;

Figure 3 depicts in block form components of the beam combiner of Figure 2;

Figure 4 depicts the components of the coupler assembly of Figure 3;

Figure 5 depicts the components of the interferometer assembly of Figure 3;

Figure 6 depicts in block form components of the beam expander of Figure 2;

Figure 7 depicts in block form components of the orientation camera of Figure 2 showing the locations of the intermediate and final images;

Figures 8a and 8b define the coordinate system for an unrotated cube-comer retroreflector;

Figures 9a and 9b show the effect of pitch angle on the retroreflector;

Figures 10a and 10b show the effect of yaw angle on the retroreflector;

Figures 11a and 11b show the effect of roll angle on the retroreflector;

Figure 12 illustrates the appearance of the image on the photosensitive array within the orientation camera;

Figure 13 depicts the laser tracker of Figure 1 where the rigid structure is rotated to enable a wide-field locator camera to simultaneously view plural retroreflector targets;

Figure 14a is a front view of the locator camera on the rigid structure;

Figure 14b is a cross sectional view of the locator camera of Figure 14a taken along line 14b-14b;

Figures 15a-15c depict the formation of an image on the wide-field locator camera;

Figure 16 depicts a method of routing optical fibers near the two mechanical axes;

Figure 17 depicts a probe assembly of the preferred second embodiment; and

Figure 18 depicts a conventional laser tracker to which an orientation camera has been added for measuring six degrees of freedom.

DETAILED DESCRIPTION OF THE PREFERRED EMBODIMENTS

Reference will now be made in detail to the preferred embodiments of the present invention, examples of which are illustrated in the accompanying drawings.

The present invention may be implemented as a laser-based coordinate measurement machine, laser tracker, or other laser based measuring device. The present invention provides a new type of beam-steering mechanism; the ability to measure six degrees of freedom rather than just three degrees of freedom; and the ability to locate a plurality of retroreflector targets over a relatively wide field of view.

The invention does not require beam-steering optics because the laser light is routed through the laser tracker with optical fibers rather than with beam-steering mirrors or prisms. Laser light is processed, detected, and analyzed by optical and electrical components located for the most part away from the rotating elements within the tracker. One advantage of this approach is that it reduces the size and cost of the laser tracker system. Another advantage is that it improves accuracy and stability of the laser tracker system. The architecture is flexible enough to allow any number of laser beams to be launched without the use of optical beam-steering components.

The invention also provides the laser tracker with the ability to measure the six degrees of freedom of a target object which, in an exemplary embodiment, may be a cube-comer retroreflector. A hidden-point probe (capable of measuring points that are obscured from view) can be formed by attaching the target object to one end of a shaft and a probe tip to the other end of the shaft. The target object may also be attached directly to a machine tool or to the end-effector of a robot to more precisely control the movement of the tool or robot.

The invention also provides the laser tracker with the ability to determine the location of a plurality of retroreflector targets over a relatively large volume surrounding the tracker. To activate the target-locator feature of the tracker, the rotating portion of the tracker is turned to bring a ring of LED's surrounding a lens and photosensitive array to face the retroreflector targets. Flashes of light from the LED's travel to the retroreflectors then return to the tracker, where they pass through the lens onto the photosensitive array. The locations of the spots on the array indicate the angular directions of the targets.

Because the invention has the capability of launching multiple laser beams of different types, several modes of distance measurement are possible. One mode of distance measurement uses a laser beam that tracks a retroreflector to indicate either absolute or incremental distance. Another mode of distance measurement uses a laser beam to scan a diffuse surface. Either or both modes of distance measurement may be included in a given coordinate-measuring device.

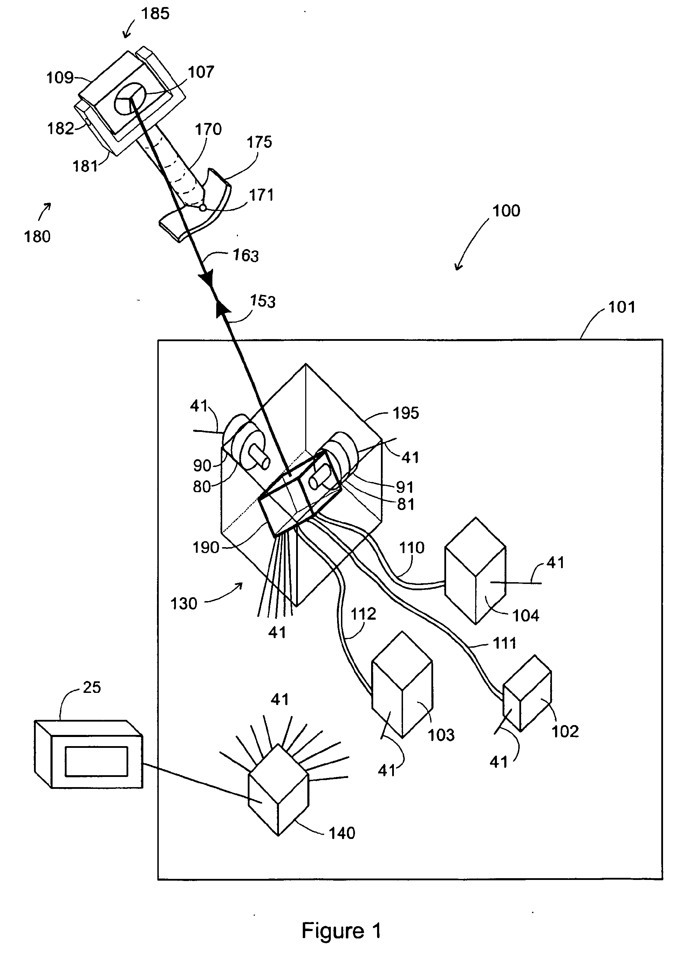

Figure 1 shows a perspective, block-diagram view of a laser tracking system according to an embodiment of the invention. The laser tracking system comprises a laser tracker 100 and a probe assembly 180. The probe assembly comprises target object 185, adjustable stage 181, probe shaft 170, and probe tip 171. The target object 185 comprises retroreflector 107 and housing 109 comprise target object 185. Laser tracker 100 emits a laser beam 153 toward cube-comer retroreflector 107 mounted on housing 109. Housing 109 is attached to adjustable stage 181 that is designed to pivot about axis 182 and lock into place. Adjustable stage 181 is attached to probe shaft 170, which is attached on the opposing end to probe tip 171. Probe tip 171 is held in contact with the object 175 under evaluation. With the combination of laser tracker 100, computer 25, and probe assembly 180, it is possible to measure the coordinates of the object 175 under evaluation, even if object 175 is not directly accessible to the laser beam emitted from the tracker.

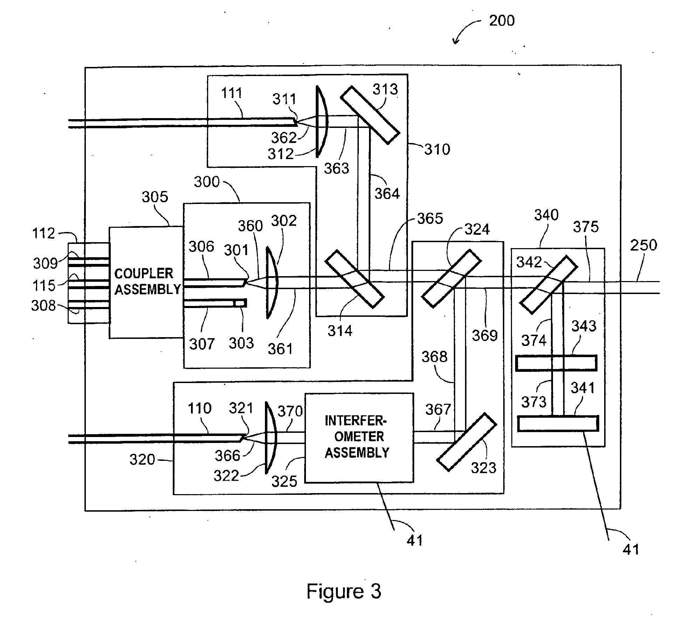

The configuration of the laser tracker of Figure 1 will now be described. Laser 102 on stationary base 101 of the laser tracker 100 injects laser light (at least essentially coherent light having one wavelength) into a first end of an optical fiber 111. The laser of the absolute-distance meter (ADM) 103 injects laser light into a first end of an optical fiber 115 (as shown in Figure 3) that is contained within optical fiber assembly 112. Laser 104 injects laser light into a first end of an optical fiber 110. These optical fibers are routed to rigid structure 190, at which location laser light is launched out of the second end of optical fibers 110, 111, 115 (as shown in Figure 3). If desired, the combined laser light may be conditioned by optical elements within rigid structure 190 and emitted from rigid structure 190 as laser beam 153. Laser light 153 travels to retroreflector 107, where it is reflected parallel to laser beam 153. If laser beam 153 is centered on the vertex of the cube-comer retroreflector, then laser beam 163 will coincide with laser beam 153. That is, laser beam 163 will retrace the path of laser beam 153. The laser beam 163 enters rigid structure 190, where it is conditioned, if desired, and injected back into optical fibers 110, 111, and/or 115, or otherwise detected and processed as explained below. Rigid structure 190 is rotated by motor 81 with the angle of rotation indicated by angular encoder 91. Steering platform 195 includes rigid structure 190 and the elements mounted thereto, i.e., motor 81 and angular encoder 91. Steering platform 195 is turned on base 101 by motor 80, with the angle of rotation indicated by angular encoder 90. Rigid structure 190 is therefore supported for rotation about two orthogonal axes on base 101.

ADM 103 measures the absolute distance from laser tracker 100 to retroreflector 107. This device is capable of measuring the distance to retroreflector 107 in a single shot. Consequently, it can be used to perform rapid point-and-shoot measurements of multiple retroreflector targets. Laser 104 is used in conjunction with optical and electrical elements to measure the incremental distance moved by retroreflector 107. An example of a device that measures incremental-distance movement is the laser interferometer which measures the number of interference fringes that occur as the retroreflector is moved from a starting position. In a laser interferometer, if an obstruction is placed in the path of the interferometer's laser beam, all displacement information will be lost. In this circumstance, if a laser-tracker system has only an incremental-distance measurement system and not an absolute-distance measurement system, then the retroreflector must be returned to a reference position and the measurement started anew. Laser 102 is a stand-alone laser and will be discussed in more detail with reference to fiber launch assembly 310 of Figure 3. Any number of laser beams may be sent over optical fibers into rigid structure 190.

Electronics box 140 provides electrical power to motors 80 and 81, angular encoders 90 and 91, lasers 102 and 104, ADM 103, as well as other electrical components within rigid structure 190. Electronics box 140 analyzes signals from angular encoders 90 and 91, from ADM 103, and from other electrical components to calculate angles and distances from tracker 100 to retroreflector 107. Electronics box 140 is attached to computer 25, which provides application software for the advanced analysis of coordinate data.

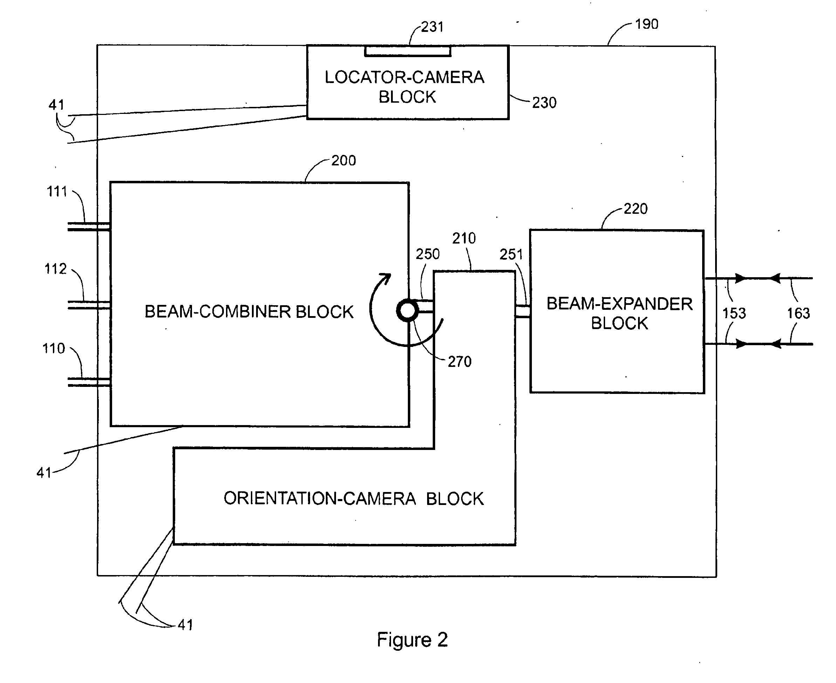

The preferred optical elements within rigid structure 190 are shown in block diagram form in Figure 2. The main functional blocks within rigid structure 190 include beam-combiner block 200, orientation-camera block 210, beam-expander block 220, and locator-camera block 230.

The optical fiber assemblies 110, 111, 112, etc. are routed into beam-combiner block 200, which combines the laser beams and sends them out as a single composite laser beam 250 that includes coherent light at a plurality of separate, discrete wavelengths. The composite laser beam 250 passes through orientation-camera block 210 to become laser beam 251. Laser beam 251 is beam expanded by beam-expander block 220, thereby exiting rigid structure 190 as expanded laser beam 153. The laser beam 153 travels to retroreflector 107 as shown in Figure 1 and returns as laser beam 163. The laser beam 163 retraces the path of the outgoing laser beams 153, 251, 250 back through beam-expander block 220 and orientation-camera block 210 into beam-combiner block 200. Electrical lines 41 provide power from electronics box 140 to mechanical and electro-optical devices. Electrical lines 41 also route electrical signals from electro-optical devices to electronics box 140 for analysis. Rigid structure 190 rotates around the center of shaft 270 which is attached to motor 81 as shown in Figure 1. In a typical mode of operation, motor 81 rotates rigid structure 190 so that laser beam 153 points toward retroreflector 107, thereby causing laser beam 163 to retrace the path of laser beam 153. In another mode of operation, motor 81 rotates rigid structure 190 until aperture 231 of locator camera 230 is aimed in the general direction of one or more retroreflectors in the surrounding environment. Locator camera 230 determines the approximate location of the retroreflector targets within a wide field of view.

Beam-combiner Block

Figure 3 shows diagrammatically the optical and electro-optical components within a preferred beam-combiner block 200. The main assemblies within beam-combiner block 200 are first laser-beam fiber launch and pickup assembly 300, second laser-beam fiber launch and pickup assembly 320, laser-beam fiber launch assembly 310, and position-detector assembly 340.

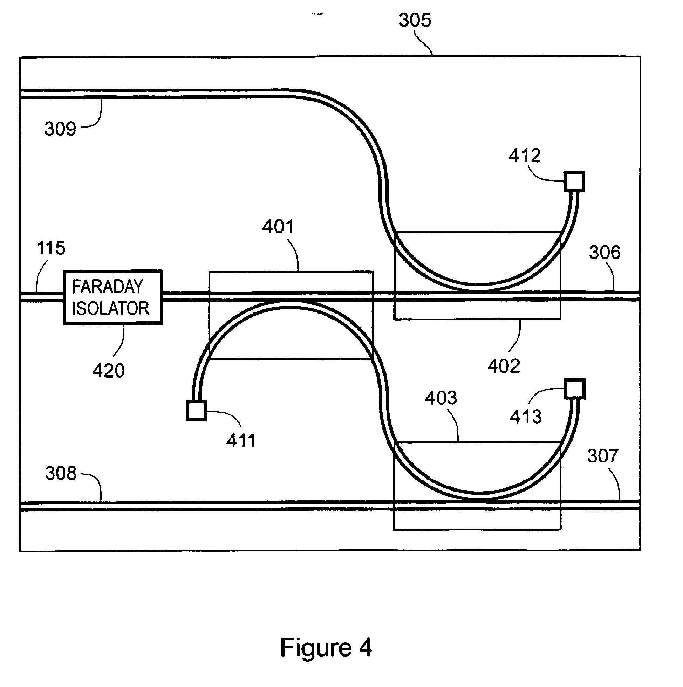

First laser-beam fiber launch and pickup assembly 300 receives light an end of optical fiber 115 which is attached at its opposing end to a laser in the laser and ADM 103 shown in Figure 1. Laser light (at least one essentially coherent light at a first discrete frequency) travels in optical fiber 115 until it reaches coupler assembly 305. Part of the laser light emerging from coupler assembly 305 is in optical fiber 306. It travels to fiber termination 301, at which point it diverges as cone of light 360. Lens 302 collimates this light as laser beam 361 which passes through beam splitter 314 to become laser beam 365. Another part of the laser light emerging from coupler assembly 305 travels through an optical fiber 307 to fiber retroreflector 303 and returns through optical fiber 307 into coupler assembly 305 thereby forming a reference path as will be discussed with reference to Figure 4.

Laser-beam fiber launch assembly 310 receives light from an end of optical fiber 111 which is attached at its opposing end to laser 102 shown in Figure 1. Laser light travels in optical fiber 111 until it reaches fiber termination 311 where it diverges as cone of light 362. Lens 312 collimates the light as laser beam 363 which then reflects off mirror 313 to become laser beam 364. Laser beam 364 reflects off beam splitter 314 to join laser beam 365 from first laser-beam fiber launch and pick-up assembly 300. Laser beam 365 passes through beam splitter 324 to become laser beam 369.

Second fiber launch and pickup assembly 320 receives light from an end of optical fiber 110 which is attached at its opposing end to laser 104 shown in Figure 1. Laser light travels in polarization-maintaining (PM) optical fiber 110 until it reaches fiber termination 321 where it diverges as cone of light 366. Lens 322 collimates the laser light as laser beam 370. Laser beam 370 passes into interferometer assembly 325 and emerges as laser beam 367. The laser beam reflects off mirror 323 as laser beam 368 and off beam splitter 324 as a part of laser beam 369. Laser beam 369 passes through beam splitter 342 to become laser beam 250.

Figure 2 shows that laser beam 250 passes out of beam-combiner block 200 and continues through the rest of the elements in rigid structure 190, then travels as laser beam 153 to retroreflector 107 of Figure 1 and returns as laser beam 163 to rigid structure 190. The laser light of beam 163 retraces the path of laser beams 251, 250 through the optical elements 220, 210 within rigid structure 190. As shown in Figure 3, when the returning laser beam enters beam-combiner block 200, some of the returning light reflects off beam splitter 342 as laser beam 374. Beam splitter 342 reflects a portion of all of the wavelengths of laser light within laser beam 250. Optical filter 343 blocks all but one wavelength of the light within laser beam 374, which it transmits as laser beam 373. Position detector 341 is aligned so that laser beam 373 strikes the center of position detector 341 when laser beam 153 of Figure 1 is centered on retroreflector 107. If laser beam 373 does not strike the center of position detector 341, an error signal is generated at detector 341, thereby causing motors 80 and 81 to turn rigid structure 190 to center laser beam 153 on retroreflector 107. In this way, position detector 341 enables the outgoing laser beam 153 of Figure 1 to automatically track a moving retroreflector 107. Position detector 341 can be any device capable of giving an electrical signal in response to the position of light on a two-dimensional surface. Such a device may include, but is not limited to, a quadrant detector, a lateral-effect detector, a charge-coupled-device (CCD) array, a charge-injection-device (CID) array, or a complementary-metal-oxide-semiconductor (CMOS) array.

The number of laser beams launched out of beam-combiner block 200 can be increased or decreased as desired by adding more or fewer beam splitters within beam-combiner block 200. One way to combine and separate different types of laser beams is on the basis of wavelength. A dichroic beam splitter is a type of beam splitter that can pass particular wavelengths while reflecting other wavelengths. In a specific implementation using dichroic beam splitters, optical fiber 115 may emit laser light at a wavelength of 1550 nm, optical fiber 111 may emit laser light at 690 nm, and optical fiber 110 may emit laser light at 633 nm. Thus, beam splitters 314 and 324 may be dichroic beam splitters with the following characteristics. Beam splitter 314 transmits laser wavelengths longer than 1400 nm, but reflects wavelengths shorter than 1400 nm. Beam splitter 324 transmits wavelengths longer than 660 nm, but reflects wavelengths shorter than 660 nm. In this way, the laser beams are combined as they pass through beam-combiner block 200 on the way out of rigid structure 190. Similarly, the laser beams are separated on the reverse path through beam-combiner block 200. Combining and separating the wavelengths with dichroic beam splitters reduces the interaction among the laser beams, thereby preventing measurement errors. Furthermore, the use of dichroic beam splitters reduces power loss that would result from the use of wavelength-insensitive beam splitters.

The laser beam sent out of fiber launch assembly 310 may serve a number of purposes. In the specific example shown in Figures 1 and 3, the laser beam launched from second laser-beam fiber launch and pickup assembly 320 is red (633 nm), thereby providing a visible indication of the direction to which the laser beam is pointing. In the event that the laser beam from second laser-beam fiber launch and pickup assembly 320 is turned off or, not visible, is otherwise not available, the laser beam emitted by laser-beam fiber launch assembly 310 can serve as a visible pointer beam to assist the operator in locating retroreflector targets with the tracker. This same laser beam may be used as a part of a complex system for other purposes such as determining the orientation of a retroreflector target. There are occasions in which it is very useful to have the laser tracker emit multiple laser beams. As noted above, the flexible architecture of the invention allows as few or as many laser beams as desired to be launched.

Figure 4 shows a detailed view of the coupler assembly 305. Laser light enters coupler assembly 305 on optical fiber 115 and travels to Faraday isolator 420 which allows light to travel in only one direction. Faraday isolator 420 is included to prevent back-reflected laser light from entering and destabilizing the laser found in the ADM 103. The laser light passes through Faraday isolator 420 and enters optical coupler 401 which, in an exemplary configuration, sends 85% of the optical power to optical coupler 402 and 15% of the optical power to optical coupler 403. Of the optical power entering coupler 402, a portion such as one half is sent to low-reflectance termination 412 and the remaining half travels to optical fiber 306. As shown in Figures 1 and 3, the laser light in optical fiber 306 is launched from the fiber and travels to retroreflector 107. The light from the retroreflector retraces its path through the laser tracker and re-enters optical fiber 306. When light is received via optical coupler 402, half of the optical power is sent to the Faraday isolator 402 where it is blocked. The remainder is sent to optical fiber 309 and continues to ADM 103 via optical fiber assembly 112. Of the optical power that is sent from optical coupler 401 to optical coupler 403, half travels to low-reflectance termination 413, and the other half travels along optical fiber 307 to fiber retroreflector 303. The light retraces its path back along optical fiber 307 into coupler 403. Half of the optical power is sent to coupler 401 where it is sent in equal parts to the low-reflectance termination 411 and the Faraday isolator 420. The other half of the optical power is sent into optical fiber 308 and continues to ADM 103 via optical fiber assembly 112.

The optical couplers shown in Figure 4 split light into two paths in the forward direction and two paths in the reverse direction. A low-reflectance termination is used to absorb the light in one of the four possible paths (two forward paths plus two reverse paths). Another term for a possible path is a "port," so the couplers shown in Figure 4 are examples of four-port couplers having a low-reflectance termination on one of the four ports. An alternative to the type of coupler shown in Figure 4 is the optical circulator, which has three ports, rather than four, ports. In other words, in an optical circulator, the laser light travels along one optical-fiber path in the forward direction and branches to a different optical fiber path in the reverse direction. For the purposes of this invention, the term optical coupler is used to encompass both four-port and three-port light splitting devices. In other words, a term fiber-optic coupler (or simply coupler) is understood to include any type of device that splits light in an optical fiber and therefore can be either a four-port coupler or a three-port circulator.

For absolute-distance measurement, two paths are used: a measurement path and a reference path. Both paths begin at the laser of the ADM 103 and include the optical fiber 115 and the Faraday isolator 420. In the measurement path, the laser light travels through optical fiber 306, through rigid structure 190, to the retroreflector 107 and back, into fibers 306 and 309, and then into a measurement detector (not shown) in the ADM 103. In the reference path, the laser light travels through optical fiber 307, to the fiber retroreflector 303 and back, into fibers 307 and 308, and then into a reference detector (not shown) in the ADM 103. The optical fibers 308 and 309 are in the reference and measurement channels, respectively, and are matched in length. They are routed in close proximity to one another so that the local temperatures experienced by each are nearly equal. This commonality of length and temperature has the effect of minimizing the errors caused by temperature-induced changes in the index of refraction of the optical fibers. Without this commonality, a changing temperature might be mistaken for a changing distance to the retroreflector.

Many types of ADM are compatible with the fiber delivery beam-steering mechanism depicted in Figure 1. While any suitable type of ADM can be employed, an exemplary type of ADM operates by measuring the phase shift of laser light that is intensity modulated by a sine wave. Thus, the particular type of laser might be a distributed feedback (DFB) semiconductor laser whose optical power is modulated by the direct application of a radio-frequency (RF) electrical signal at a single (sinusoidal) frequency of 3 GHz. For any given distance to the retroreflector 107, there will be a corresponding difference in the phase of the reference and measurement channels. If a is a constant, $f$ is the frequency of modulation (3 GHz), c is the speed of light ($\cong 3 \times 10^8$ m/s), $n$ is the group index of refraction of the air through which the laser light travels ($\cong 1$), $m$ is an integer, and $\phi$ is the phase difference measured by the ADM, then the distance d from laser tracker 100 to retroreflector 107 is given by the following formula:

$$d = a + \frac{c}{2fn}\left(m + \frac{\phi}{2\pi}\right). \qquad (1)$$

The constant $a$ sets the distance scale so that a distance of zero is set at the pivot point through which the laser beam appears to emanate as the laser tracker is turned to different angles. The pivot point is located approximately at the intersection of the laser beam and the center of shaft 270. The integer $m$ is equal to the number of complete multiples of $2\pi$ radians in the phase difference (measurement phase minus reference phase) measured by the ADM. For example, if the frequency of modulation $f$ is 3 GHz, then from Eq. (1) the distance corresponding to a phase difference of $2\pi$ radians is approximately $3 \times 10^8/2(3 \times 10^9)(1)$ m = 0.05 m . This distance is sometimes referred to as the unambiguous range. If the distance $d$ - $a$ is 1.22 meters, then the number of complete multiples of $2\pi$ radians in the phase difference is int (1.22/0.05) = 24 and the residual phase shift is approximately $\phi \cong 2\pi(1.22-0.05.24)/0.05=0.8\pi$ radians.= $0.8\pi$ radians. The most convenient way to determine the integer $m$ is to temporarily reduce the frequency $f$ to a value that is small enough to cover the entire range of interest, but with an accuracy that is large enough to determine the value of $m$. For example, suppose that the frequency is temporarily reduced to 2.5 MHz. In this case, the unambiguous range is $3 \times 10^8/ 2(2.5 \times 10^6)(1)$ m=60 m. If the accuracy of the phase measurement is one part in $10^5$ , then the position of retroreflector 107 is known to an accuracy of 60 10-5 m = 0.6 mm at any distance up to 60 meters from the tracker. This value is much smaller than the unambiguous range of 50 mm for the higher modulation frequency of 3 GHz. This means that a single measurement of phase difference with the lower modulation frequency is sufficient to determine the integer $m$ in Eq. (1). This technique of reducing the frequency to determine the value of $m$ is of greatest value if it is needed only at the start of a measurement or after the laser beam has stopped tracking the retroreflector 107. For this to be the case, the phase measurements must be taken rapidly enough to ensure that the retroreflector has not moved over a complete unambiguous range between measurements. For example, if measurements are made 1000 times per second, then the radial speed must not exceed (0.05)(1000)/2 = 25 meters per second. The human arm is not capable of moving a retroreflector target at a radial speed of greater than about 4 meters per second, so this technique of determining $m$ is feasible under the conditions given above.

The modulated laser light that travels on optical fibers 308 and 309 within optical fiber assembly 112 arrives at optical detectors located within ADM 103. These optical detectors convert the laser light to electrical signals. For the particular type of ADM described above, electrical components within ADM 103 process the electrical signal to determine the phase of the signal for the measurement and reference paths.

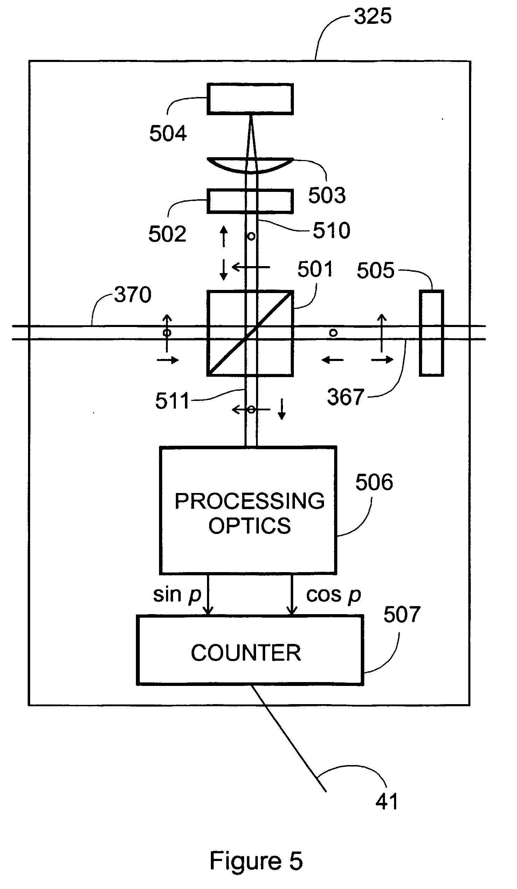

As shown in Figure 3, laser light that is launched from optical fiber 110 is collimated by lens 322 to become laser beam 370. This laser beam travels to interferometer assembly 325, a detailed view of which is shown in Figure 5. The laser light of beam 370 is linearly polarized at 45 degrees to the plane of the paper in Figure 5. In other words, half of the laser light is polarized in the plane of the paper and half of the light is polarized perpendicular to the plane of the paper, with both polarizations having the same phase. The arrow that is perpendicular to laser beam 370 in Figure 5 represents the laser light that is polarized in the plane. The small circle that is centered on laser beam 370 in Figure 5 represents the laser light that is polarized perpendicular to the plane of the paper. Laser beam 370 travels to polarizing beam splitter 501. The portion of laser beam 370 that is polarized perpendicular to the plane of the paper in Figure 5 reflects off polarizing beam splitter 501 to become laser beam 510. The light travels to quarter waveplate 502 having a fast axis oriented at 45 degrees to the plane of the paper in Figure 5. The waveplate converts the polarization state of laser beam 510 from linear to circular. Lens 503 focuses the light onto mirror 504, which retroreflects the laser beam 510 back on itself. Alternatively, a retroreflector (such as a cube-comer retroreflector) may be substituted for lens 503 and mirror 504. Lens 503 collimates the retroreflected light, sending it back through quarter waveplate 502, changing the polarization state of the light from circular to linear, with the direction of the linearly polarized light now in the plane of the paper. This light, which is now p-polarized with respect to the polarizing beam splitter 501, passes through the beam splitter to become part of laser beam 511. That portion of laser beam 370 that is in the plane of the paper in Figure 5 travels straight through polarizing beam splitter 501 to become laser beam 367. This light passes through quarter waveplate 367, whose fast axis is oriented at 45 degrees with respect to the plane of the paper. When laser beam 367 passes through the waveplate, its polarization state changes from linear to circular. The resulting laser beam travels through the optical elements in rigid structure 190, travels to retroreflector 107, and travels back through the optical elements in rigid structure 190 to arrive at quarter waveplate 505. As laser beam 367 travels in the reverse direction through quarter waveplate 505, its polarization state changes from circular to linear, with the direction of the linearly polarized laser light now in perpendicular to the plane of the paper in Figure 5. (As an alternative to placing quarter waveplate 505 inside interferometer assembly 325, the waveplate may be placed at some later point along the path of the laser beam.) Laser beam 367, which is now s-polarized with respect to polarizing beam splitter 501, reflects off the beam splitter to become part of laser beam 511. Laser beam 511 comprises of two portions: a reference portion that is polarized in the plane of the paper and a measurement portion that is polarized perpendicular to the plane of the paper. As the retroreflector 107 is moved in a radial direction with respect to laser tracker 100, the phase difference between these two linearly polarized components will vary. There will be a phase change of $2\pi$ radians for each change of one-half wavelength in the radial distance to the retroreflector. Here, the wavelength is that of the laser light in laser beam 370 as seen in the local medium (air) through which the laser light travels. Laser beam 511 travels to processing optics 506, which uses optical elements such as beamsplitters, waveplates, and optical detectors to provide two electrical signals. One electrical signal is proportional to cos $p$, and the other electrical signal is proportional to sin $p$, where $p$ is the phase difference between the two linearly polarized portions of laser beam 511. The electrical signals are sent to a counter circuit 507 that counts the number of half wavelengths traveled by retroreflector 107. The product of the wavelength of the light and the number of wavelengths traveled gives the total displacement of retroreflector 107 relative to some starting position. Counter 507 sends electrical signals over electrical line 41 to electronics box 140 for conversion from counts to a radial distance. If laser beam 153 is obstructed from reaching retroreflector 107, even for a moment, then information on the correct number of counts is lost, and the measurement must be started anew from some reference position whose distance to the tracker has been previously established. The type of interferometer shown in Figure 5 is known as a homodyne interferometer because the reference portion and measurement portion that are combined to form laser beam 511 are both at the same wavelength. Alternatively, a heterodyne interferometer in which two different laser wavelengths are mixed together prior to optical detection or other suitable system could be used.

Beam-expander Block

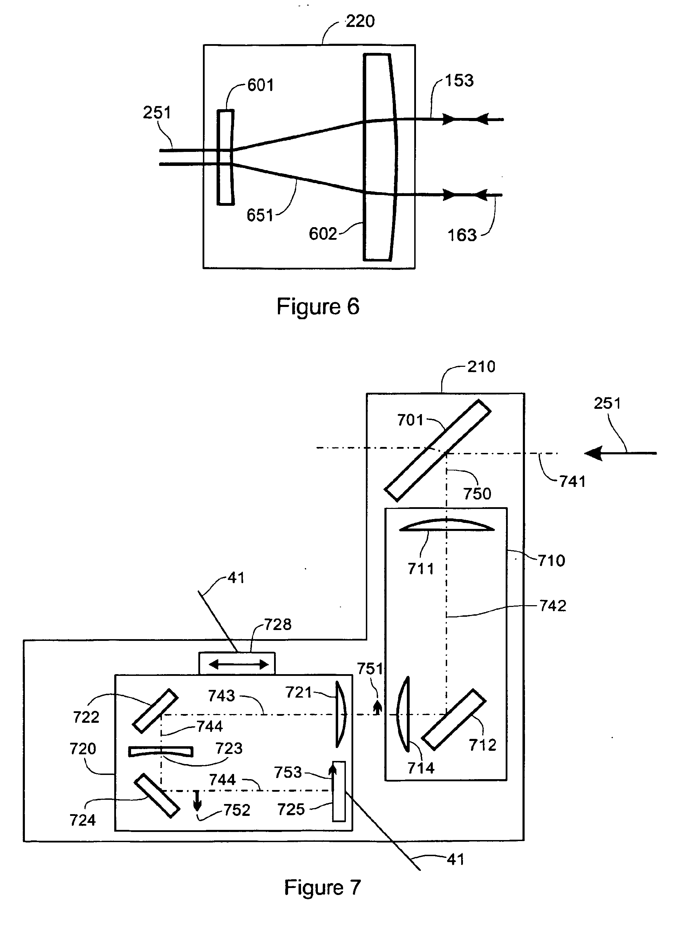

The optical components within beam-expander block 220 of Figure 2 are shown in Figure 6. The beam-expander block 220 expands the laser beam as it travels in the forward direction and to contract the laser beam as it travels in the reverse direction. Lens 601 converts collimated laser beam 251 into cone of light 651. Lens 602 converts cone of light 651 into collimated laser beam 153.

The reason for expanding the laser beam before it leaves rigid structure 190 is to reduce the divergence of the laser beam during propagation. This makes it possible to place retroreflector 107 farther from laser tracker 100 than would otherwise be the case. Alternatively, the beam-expander block 220 could be eliminated by increasing the distance in Figure 3 between the fiber terminations 301, 311, and 321 and the corresponding lenses 302, 312, and 322 while increasing the focal lengths of lenses 302, 312, and 322 by a corresponding amount. Accordingly, the diameters of laser beams 361, 363, and 370 would be increased, thereby eliminating the need for beam-expander block 220. The disadvantage of this approach is that it requires that many optical elements (lenses, mirrors, beam expanders, and position detector) be made larger to accommodate the larger beam diameters. By adding beam-expander block 220, the overall size of beam-combiner block 200 is reduced.

Orientation-camera Block

The main elements of orientation-camera block 210 of Figure 2 are shown in Figure 7. On the return path from retroreflector 107, laser beam 251 travels along optical axis 741. Beam splitter 701 reflects a portion of the beam to a path along optical-axis segments 750, 742, 743, and 744. Eventually, this reflected light arrives at photosensitive array 753. The complete lens system, which comprises the beam-expander block 220, afocal-lens block 710, and relay lenses, 721 and 723, produces an image on the photosensitive array of the pattern of light in the vicinity of the vertex of retroreflector 107. The beam-expander block 220 and the afocal lens block 710 work together to produce a first intermediate image 751 of this pattern of light. The location of first intermediate image 751 will depend on the distance of retroreflector 107 from the laser tracker. Motorized stage 728 is activated to move lens 721 to an appropriate distance from first intermediate image 751. Lens 721 forms second intermediate image 752 located past negative lens 723 but inside the back focal point of negative lens 723. Negative lens 723 converts the second intermediate image into a real image 753 on photosensitive array 725.

The orientation-camera block 210 allows the distance between the tracker and the retroreflector target to be large. For example, a distance of more than thirty meters is possible. The lens systems of the orientation-camera block 210 and beam-expander block 220 have two main functions. First, a magnification that is approximately constant is maintained so that the image will nearly fill the photosensitive array, thereby maintaining high accuracy for large and small distances alike. Second, the adverse effects of diffraction, which may result in lines or other features changing shape or direction during propagation over large distances, are minimized. To maintain constant magnification, afocal lens systems 220 and 710 are used. An afocal lens system is one that converts an incoming ray of light that is parallel to the optical axis into an outgoing ray of light that is also parallel to the optical axis. A succession of afocal lens systems, as represented by the combination of lens systems 220 and 710, has the property of constant magnification. In other words, the size of first intermediate image 751 is constant, regardless of the distance from retroreflector 107 to the tracker. If first intermediate image 751 is located between lenses 711 and 714, then it is not possible to place photosensitive array 725 at the location of this intermediate image. Relay lenses 721 and 723 eliminate this problem by converting first intermediate image 751 into image 753 on array 725. Motorized stage 728 places lens 721 an appropriate distance from first intermediate image 751. Knowledge of the distance to retroreflector 107, which is a quantity measured by the tracker, along with knowledge of the focal lengths and positions of the lens elements, is sufficient to determine the correct placement of lens 721. As is explained below, it is not necessary for the lens system to obtain an exactly prescribed magnification, so motorized stage 728 can be relatively inexpensive. The distance that motorized stage 728 must move will depend on the range of distances to be covered, as well as on the magnification of the lens system. Longitudinal magnification of a lens system varies in proportion to the square of the transverse magnification. As an example, suppose that a 12 x 12 millimeter area of target object 185 is imaged onto a photosensitive array having an area of 3 x 3 mm. The required (transverse) magnification for the system will then be 3/12 =1/4. This could be achieved by making the combined magnification of the afocal lens systems equal to 1/4 and the combined magnification of the relay lenses 721 and 723 equal to 1. In this case, however, to cover distances of 1 to 33 meters from the tracker, it would be necessary for motorized stage 728 to have a range of movement of $(33 -1)$ m/$4^2$ = 2 m . Such a large range of movement is impractical for most real systems. To solve this problem, the magnification of the afocal lens systems could be reduced, and the reduced magnification could be compensated with the relay lenses. For example, suppose that the afocal lens pairs have a combined magnification of 1/32, while the relay lenses have a combined magnification of 8. In this case, the net magnification is still 1/4, but the motorized stage 728 needs to have a range of movement of only $(33 -1)$ m/$32^2$ = 31.25 mm.

The photosensitive array 725 can be any device capable of returning detailed electrical information about the pattern of light incident on the array. Exemplary photosensitive arrays include the charged-coupled-detector (CCD) array, the charge-injection-device (CID) array, and the complementary-metal-oxide-semiconductor (CMOS) array. Among these, CCD arrays have high performance and small size, but CMOS arrays are often capable of providing high-speed readout with simpler electrical circuitry. CMOS and CID arrays often have the advantageous feature of random-access readout of pixel data.

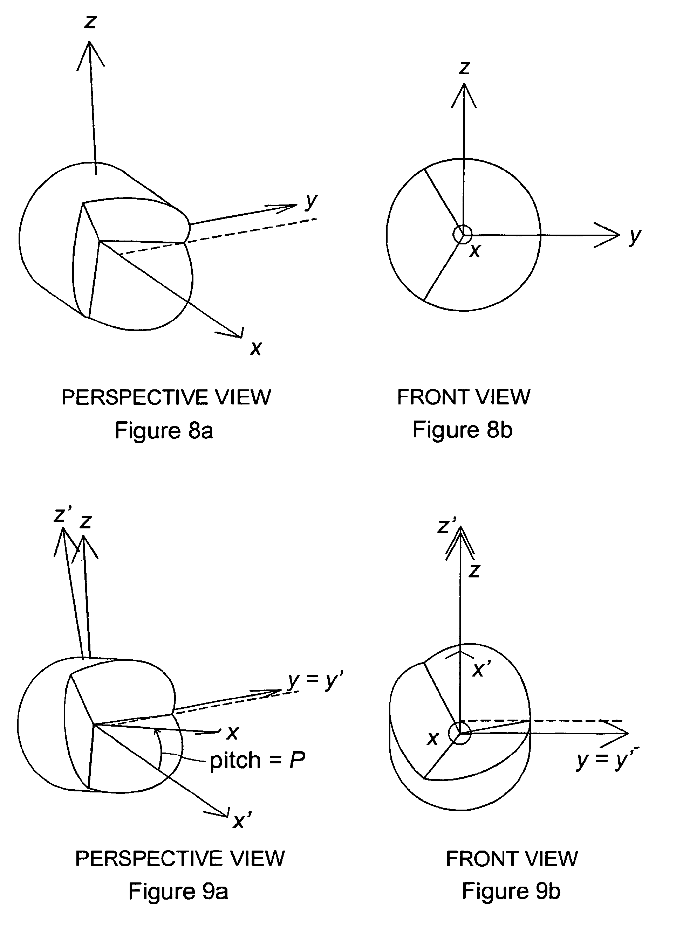

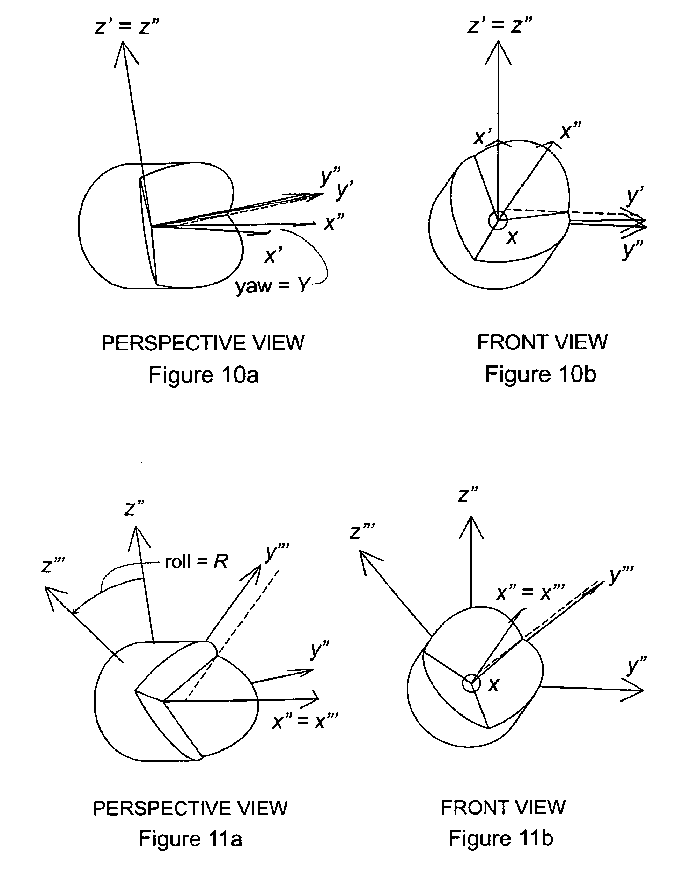

We will now discuss how the image on the orientation camera can be used to determine the pitch, yaw, and roll angles of retroreflector 107. Figures 8a and 8b show an unrotated cube-comer retroreflector. In other words, in Figures 8a and 8b, the roll angle is zero, the yaw angle is zero, and the pitch angle is zero. By definition, the $x$ direction shown in Figures 8a and 8b is opposite the direction of the laser beam that is sent into the retroreflector. The three perpendicular reflecting surfaces of the cube-comer retroreflector form three lines of intersection. As shown in Figure 8a, the $x$-$y$ plane contains the $x$ axis and one of the lines of intersection. The $x$-$y$ plane also contains the $y$ axis, which is perpendicular to the $x$ axis and passes through the vertex of the cube corner. The dashed line in Figure 8a is parallel to the $y$ axis and has been included for clarity. In the front view of Figure 8b, the $y$ and $z$ axes lie in the plane of the paper, while the x axis points out of the paper. Figures 9a and 9b show the effect of rotating the retroreflector about the $-y$ axis by the pitch angle $P,$ which is 15 degrees in this example. This rotation operation results in new coordinate system: $x ; y ; z',$ with $y = y'$. Figures 10a and 10b show the effect of rotating the retroreflector about the $z'$ axis by the yaw angle $Y$, which is 10 degrees in this example. This rotation results in a new coordinate system: $x ", y ", z ",$ with $z'' = z'$. Figures 11 a and 11b show the effect of rotating the retroreflector about the $x''$ axis by the roll angle $R$, which is 40 degrees in this example. Note that in Figure 11b the $x$ axis (direction opposite that of the laser beam) still points straight out of the paper. The roll, yaw, and pitch angles are found from a measurement of the three lines of intersection by the orientation camera 210. The camera detects the three lines of intersection of cube-comer retroreflector 107. The vertex of cube-comer retroreflector 107, which is defined as the common point of the three reflecting surfaces, remains centered on the photosensitive array 725 of Figure 7. The electrical signals from photosensitive array 725 may be sent to a local digital-signal processing chip or sent over electrical wires 41 to electronics box 140 of Figure 1. These electrical components determine the slopes of the three lines of intersection. By definition, the y and z axes on the surface of photosensitive array 725 point in the horizontal and vertical directions, respectively. The slope of the first (reference) line of intersection is defined as $m_1 = \Delta z_1, \Delta y_1$, , where $\Delta y_1$ and $\Delta z_1$, are the horizontal and vertical distances on the surface of photosensitive array 725 from the image of the cube-comer vertex to the image of an arbitrary point on the first line of intersection. The slopes of the second and third lines of intersection are defined in a similar manner as $m_2 = \Delta z_2/\Delta y_2$ and $m_3 = \Delta z_3/\Delta y_3$. The three unknown angles, the roll angle $R$, the yaw angle $Y$, and the pitch angle $P$, are found by simultaneously solving the following three equations:

$$m_1 = \frac{\sin P \cos Y / \sqrt{2} - \sin P \sin Y \cos R + \cos P \sin R}{\sin Y / \sqrt{2} + \cos Y \cos R}, \qquad (2)$$

$$m_2 = \frac{\sin P \cos Y / \sqrt{2} - \sin P \sin Y \cos(R + 120°) + \cos P \sin(R + 120°)}{\sin Y / \sqrt{2} + \cos Y \cos(R + 120°)}, \qquad (3)$$

$$m_3 = \frac{\sin P \cos Y / \sqrt{2} - \sin P \sin Y \cos(R + 240°) + \cos P \sin(R + 240°)}{\sin Y / \sqrt{2} + \cos Y \cos(R + 240°)}. \qquad (4)$$

For the example considered here in which $R$ is 40 degrees, $Y$ is 10 degrees, and $P$ is 15 degrees, Eqs. (2) - (4) yield $m_1$, = 0.874, $m_2$ = -0.689, and $m_3$ = -2.651. As a check of these results, the slope values can also be calculated directly from the y and z values of the lines of Figure 11b. These calculations yield $m_1$, = 0.7667/0.8772 = 0.874, $m_2$ = 0.5528/-0.8026 = -0.689, and $m_3$ =-0.7788/0.2938 = -2.651, which match exactly the results obtained from Eqs. (2) - (4).

The visibility of the lines on photosensitive array 725 of Figure 7 may be improved by increasing the thickness of the lines of intersection of retroreflector 107 or by coating the lines with a non-reflective material. Thicker lines of intersection on retroreflector 107 will cause the images of the lines seen on the photosensitive array to have higher contrast. However, thicker lines of intersection on retroreflector 107 will not usually result in thicker image lines on photosensitive array 725. Usually, the thickness of the lines as seen on photosensitive array 725 is determined by the effects of diffraction of the laser light that passes through the clear aperture of laser tracker 100. The larger the clear aperture (the opening through which the light passes into the tracker), the smaller will be the deleterious effects of diffraction, which included broadening, smearing, and chopping of the image on photosensitive array 725. The deleterious effects of diffraction are also smaller when the retroreflector 107 is moved closer to the laser tracker 100. Fortunately, for the system considered here, the smearing effects of diffraction are symmetrical about the lines of intersection, so there is no bias in measuring the slopes of the lines.

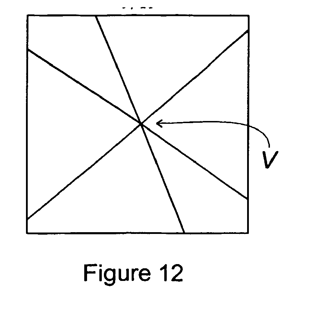

The appearance of the lines on the image of photosensitive array is shown in Figure 12. The lines on this image that pass through vertex $V$ appear on both sides of the vertex. By comparison, Figure 11b shows that the lines of intersection of the physical cube-comer retroreflector appear on only one side of the vertex. This difference is the result of the symmetry in the paths that light can take when the laser beam is centered on vertex V. For example, if a pencil of light reflects off mirror 1, then mirror 2, then mirror 3 of the cube corner, then another pencil of light can reflect off mirror 3, then mirror 2, then mirror 1. If, instead of striking a mirror, the pencil of light strikes a line of intersection, then the light will not reflect back to the tracker and a dark spot will appear on the image of photosensitive array 725. However, this dark spot would also appear if the light had traveled in the reverse direction before encountering the line of intersection. Hence light entering on either side of vertex $V$ is blocked. It is impossible to tell from the image of the photosensitive array 725 alone which of the three line segments corresponds to which of the three lines of intersection of a cube-comer retroreflector. There are several ways around this problem. The simplest, but least convenient, method for assigning the lines of the image (Figure 12) to the lines of intersection (Figure 11b is to have the operator indicate the approximate orientation of probe assembly 180 at the start of a measurement sequence. An approximate orientation is sufficient to determine which of the image line segments corresponds to each of the lines of intersection. Another simple but effective method is to temporarily turn off or reduce the power of the laser beam 153 emitted by laser tracker 100 and, at the same time, to increase the exposure time of photosensitive array 725. Under these conditions, the photosensitive array will ordinarily be able to make out the features of housing 109 and hence obtain information on the orientation of retroreflector 107. A third method for assigning the line segments to the corresponding lines of intersection is described in a second embodiment that is discussed later.

The method for determining the pitch, roll, and yaw angles as described above provides has two main advantages. First, an essentially constant-magnification camera maintains the accuracy of the measurement for a probe located either near the tracker or far from it. Second, elimination of spurious diffraction effects improves accuracy, which may otherwise change the angles of the lines or dramatically change the appearance of the lines, especially at large distances.

Figure 1 shows that housing 109 can be pivoted about axis 182 mounted on adjustable stage 181 and then locked in place. This allows cube-comer retroreflector 107 to be oriented in any desired direction. This flexibility in the orientation of retroreflector 107 is desirable because it allows probe tip 171 to be placed in slots, holes, and so forth at any given angle. Preferably shaft 182 is aligned with the vertex of retroreflector 107 to simplify calculations to determine the location of probe tip 171. If the locking mechanism allows a limited number of angular adjustments, each known to a sufficient angular accuracy (perhaps a few arc seconds), then measurement may resume as soon as the lock down is complete. If the locking mechanism is not sufficiently precise, then an alternative approach involves adjusting housing 109 to any given orientation and performing a simple compensation routine to determine the angle between retroreflector 107 and probe shaft 170. Such a compensation routine might include measuring the location of a reference point with a spherically mounted retroreflector target and then measuring the same location with probe assembly 180 tilted to cover a range of pitch, yaw, and roll angles.

It is possible to replace the described cube-comer retroreflector 107, which is made of three reflecting mirrors, with a cube-comer retroreflector prism formed of solid glass. Each type of retroreflector has advantages. For example, the cube-comer retroreflector that uses mirrors (also known as a hollow-core cube-comer retroreflector) is more accurate because it is not prone to transverse and radial offset errors and because it has no glass/air interface to cause unwanted optical reflections. The solid glass cube-comer retroreflector has a wider field of view and is usually less expensive. Equations (2), (3), and (4) can be readily modified to account for a solid-glass, rather than a hollow-core, cube-comer retroreflector.

Locator-camera Block

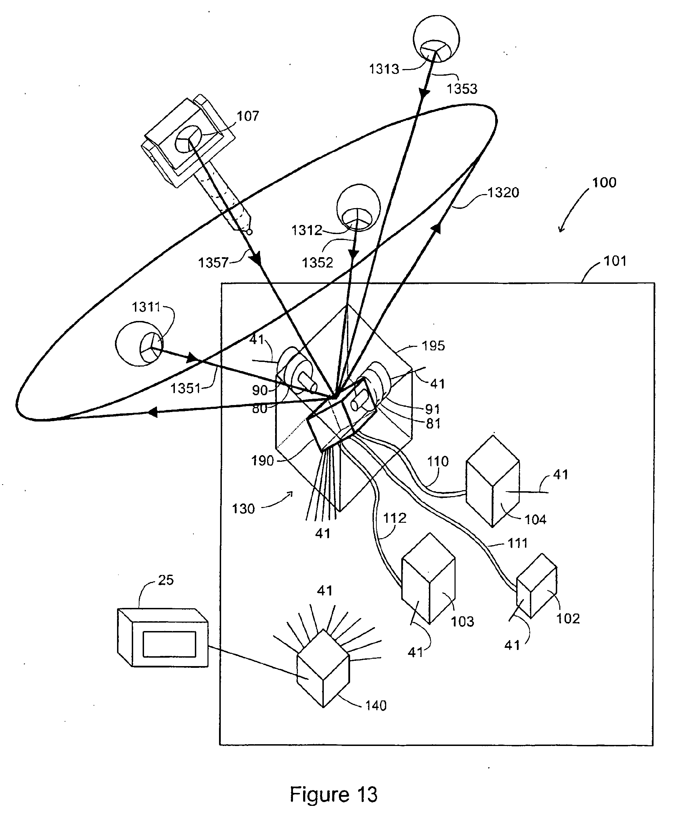

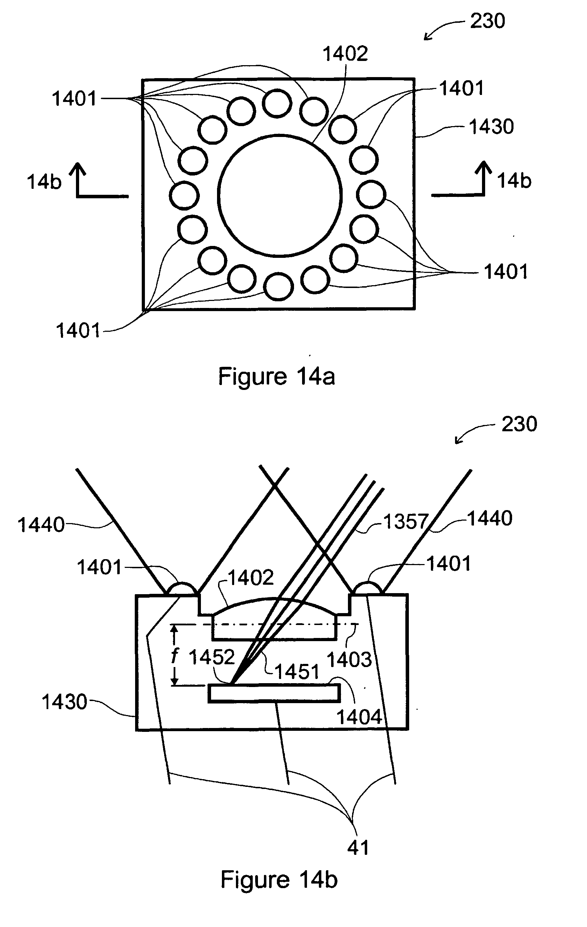

The locator-camera block 230 of Figure 2 allows laser tracker 100 to quickly determine the approximate location of multiple retroreflectors within a wide field of view. The locator camera is shown in greater detail in Figures 14a and 14b. As shown in Figure 2, locator-camera block 230 is placed to one side of rigid structure 190 and has an aperture at 231, which might be considered the "top" side of rigid structure 190. When rigid structure 190 is rotated about the center of shaft 270, locator-camera block 230 faces the retroreflectors in the region of interest. Locator-camera block 230 then emits cone of light 1320 as shown in Figure 13. This light reflects off retroreflectors 107, 1311, 1312, and 1313 shown in Figure 13. Here, retroreflector 107 represents a target of interest and retroreflectors 1311, 1312, and 1313 represent a number of other targets. The corresponding reflected light bundles 1357, 1351, 1352, and 1353 enter rigid structure 190. The light entering locator-camera block 230 falls onto a photosensitive array 1404 in Figure 14b, and the pattern is analyzed to determine the approximate location of the targets in the region of interest.

Figures 14a and 14b depict an example locator-camera arrangement. A plurality of identical light sources 1401 is provided in a ring surrounding a lens 1402. The individual light sources emit overlapping cones of essentially incoherent light 1440 that collectively constitute the cone of light 1320 in Figure 13. Each of the retroreflectors 107, 1311 - 1313 reflects some of the light from the cone of light 1320 back to the locator-camera block 230 as the bundles of light 1351 -1353 or 1357. The bundle of light 1357 is shown in Figure 14b. Lens 1402 focuses the bundle 1357 down to a spot on the surface of photosensitive array 1404. The photosensitive array 1404 is separated from the front principal plane, 1403, of lens 1402 by the focal length $f$ of the lens.

Electrical wires 41 provide power from electronics box 140 to light emitters 1401 and photosensitive array 1404. Electrical wires 41 also transmit the pixel data from photosensitive array 1404 to electronics box 140 for analysis. Electronics box 41 analyzes the pattern of light on photosensitive array 1404 to determine the location of central point 1452 on photosensitive array 1404. Electronics box 140 also performs this analysis of the pattern formed by the other bundles of light returned by the retroreflectors. In other words, reflected light bundles 1357, 1351, 1352, and 1353 are focused by lens 1402 into patterns on photosensitive array 1404. Electronics box analyzes these patterns to determine the central point of each pattern. From the location of the central points, the approximate angular direction to each of the retroreflectors can be determined.

Suppose that the retroreflector of interest is retroreflector 107. Once the information from the locator camera has been used to determine the approximate direction to retroreflector 107, motors 80 and 81 are activated to turn rigid structure 190 until laser beam 153 points in the approximate direction of retroreflector 107. The tracker then begins a search pattern, in which the direction of laser beam 153 is changed in a systematic fashion. For example, the laser beam might be steered along a spiral pattern. When the laser beam intersects the target, position detector 341 of Figure 3 senses the reflected light. The signals from position detector 341 provide enough information to enable motors 80 and 81 to point rigid structure 190 directly to the center of retroreflector 107.

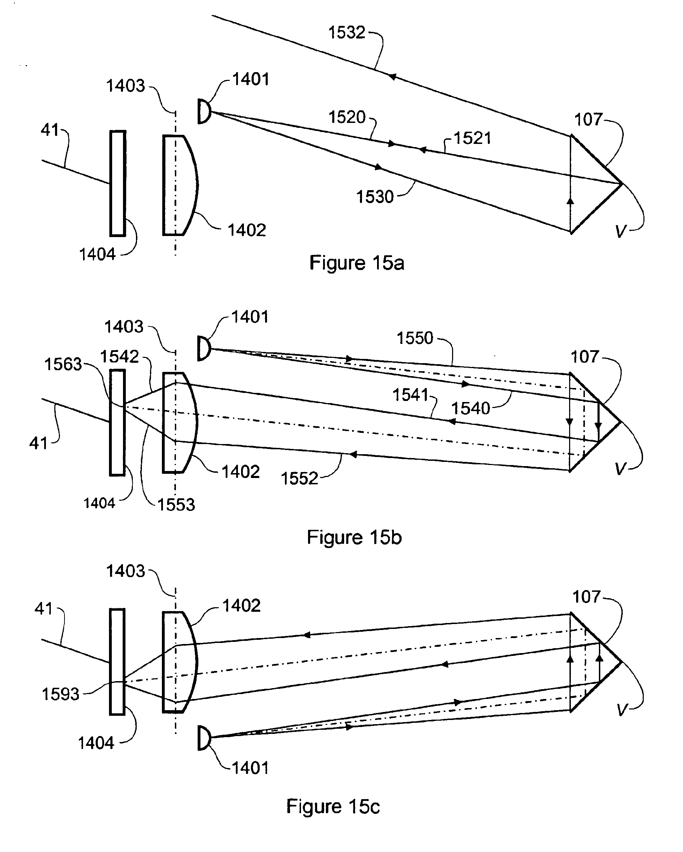

Figure 15a shows rays of light emitted by light emitter 1401 located above lens 1402. Ray of light 1520 travels to vertex $V$ of retroreflector 107. Reflected light 1521 is sent directly back to light emitter 1401. It does not enter lens 1402 or appear as a spot of light on photosensitive array 1404. Ray of light 1530 is sent to the bottom of retroreflector 107 and emerges as reflected light 1532. It also misses lens 1402 and photosensitive array 1404.

Figure 15b shows additional rays of light from light emitter 1401 located above lens 1402. Light emitter 1401 sends ray of light 1540 to a location above vertex $V$ on retroreflector 107. This ray emerges as reflected ray 1541, which passes near the top of lens 1402, is bent into ray 1542, and arrives at photosensitive array 1404 near central point 1563. Light emitter 1401 sends ray of light 1550 to the top of retroreflector 107. This ray emerges as reflected ray 1552, which travels to lens 1402, is bent into ray 1553, and arrives at photosensitive array 1404 near central point 1563. As the distance from light emitter 1401 to retroreflector 107 increases, rays 1541 and 1552 become nearly parallel, and the spot of light about point 1563 gets smaller and smaller.

Figure 15c shows rays of light from light emitter 1401 located below lens 1402. The rays of light in the bottom diagram are mirror images of the rays in the middle diagram. If $N$ is the number of pixels in photosensitive array 1404, $W$ is the width of photosensitive array 1404, $D$ is the diameter of lens 1402, and $h$ is the distance from the edge of lens 1402 to light emitters 1401, the number of pixels between central points 1563 and 1593 will, in most cases, be less than $[2N(D+h)/L]\arctan(W/2f)/2f)$. For example, if $N$=512, $D$=25mm, $h$=5mm, $L$=3m, $W$=13mm, and $f$=10 mm, the number of pixels between central points 1563 and 1593 will be less than six. Since light emitters 1401 are arranged in a circle, the image will be symmetrical, somewhat blurry, and about six pixels across. For retroreflectors further than 3 meters away, as most will be, the pattern of dots will be smaller. Electrical signals are sent from photosensitive array 1404 through electrical wire 41 to electronics box 140. Electronics box 140 analyzes the intensity of light in the pixels to obtain the best estimate of the center of the pattern produced by each retroreflector.

Routing of Optical Fibers

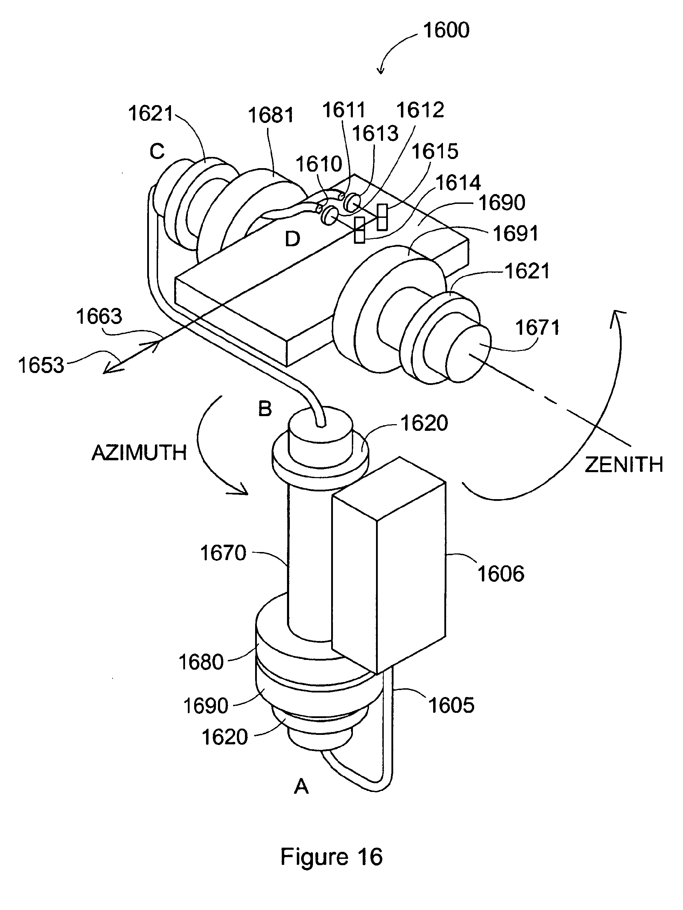

Figure 16 shows a configuration of a fiber launch laser tracker 1600 for providing advantageous routing of optical fibers. Here, optical fibers are preferably routed close to the two mechanical axes 1670 and 1671. The routing of the optical fibers in the system of Figure 16 has many advantages. For example, a large angular field of view of the tracker can be obtained. Also, bending or kinking of the optical fibers is prevented, thereby preserving measurement accuracy. Laser beam 1653, which is launched from rigid plate 1690, travels to retroreflector 107 as shown in Figure land returns as laser beam 1663. Laser light from optical fiber 1611 is collimated by lens 1613, reflected by mirror 1615, and transmitted through beam splitter 1614. Laser light from optical fiber 1612 is collimated by lens 1612 and reflected off beamsplitter 1614. Any number of laser beams can be combined into a common path to form outgoing laser beam 1653. Returning laser light may pass through a number of elements as previously discussed and omitted in Figure 16 for clarity. For example, beam splitters for the position detector and the orientation camera may be employed in accordance with the specific application. The returning laser light may reflect off beam splitter 1614 and pass through lens 1612 to be coupled into optical fiber 1610. Alternatively, the laser light may pass into another device located on rigid plate 1690 for processing as previously discussed, for example, with reference to the absolute distance meter and the interferometer. Similarly, the returning laser light may reflect off mirror 1615 and couple back into optical fiber 1611. Alternatively, this laser light may travel to another device on rigid plate 1690 for processing.

The direction of laser beam 1653 is determined by the orientation of rigid plate 1690, which in turn is determined by the angle of rotation of the zenith mechanical axis 1671 and the azimuth mechanical axis 1670. The zenith motor 1681 rotates the zenith axis 1671, and the azimuth motor 1680 rotates the azimuth axis 1670. Zenith angular encoder 1691 and the azimuth angular encoder 1690 measure the zenith and azimuth angles. Bearings 1681 and 1680 are also attached to the zenith and azimuth axes. The outside of zenith bearings 1621, zenith angular encoder 1691, and zenith motor 1681 1 are attached to the azimuth structural frame (not shown). The azimuth structural frame turns with the azimuth axis. Consequently, the zenith axis rotates within the azimuth structural frame. The outside of azimuth bearings 1620, azimuth angular encoder 1690, and azimuth motor 1680 are attached to stationary structural frame (not shown). The stationary structural frame is stationary with respect to the surroundings to which the tracker is mounted. Consequently, the azimuth axis rotates within the stationary structural frame.

Optical fibers 1610 and 1611 are incorporated into optical fiber assembly 1605. Optical fiber assembly 1605 passes through zenith axis 1671 and azimuth axis 1670. Lasers within optoelectronic module 1606 (which, like the azimuth motor 1680, is stationary) inject laser light into optical fibers 1610 and 1611. Optoelectronic module 1606 may also contain optical detectors and electronics to determine the distance to retroreflector 107 or to a diffuse surface under investigation. The optical fiber assembly 1605 travels from optoelectronic module 1606 to the underside of azimuth axis 1670. It is attached to the stationary structural frame near point A shown in Figure 16. At point A, the fiber is stationary with respect to the rotating azimuth axis. At the other end of the azimuth axis, optical fiber assembly 1605 is attached to the azimuth structural frame near point B, which rotates along with azimuth axis 1670. Since one end of the fiber is fixed and the other end of the fiber is rotating with respect to the rotation of the azimuth axis, the optical fiber will experience a torsional twist. In most cases, a gentle twist of this sort will not degrade measurement accuracy. Optical fiber assembly 1605 is routed to the zenith axis, where it is attached to the azimuth structural frame near point C. At point C, the fiber is stationary with respect to the rotating zenith axis. At the other end of the zenith axis, fiber assembly 1605 is attached near point D, which rotates along with the zenith axis 1671.

Optical fiber assembly 1605 is routed through the two mechanical axes. The fiber assembly is stationary at one end of each axis. At the other end, the fiber assembly rotates along with the axis. This produces a torsional twist, which is acceptable in most situations. A slightly different method of routing optical fiber assembly 1605 near the two mechanical axes may be preferable in some cases. In this method, the optical fibers are placed in coils to the outside of the mechanical axes, with the end of the optical fiber attached at one end to a point that is stationary relative to the mechanical axis and at the other end attached to a point that moves with the mechanical axis. Here, the diameter of the coils will change slightly as the axis is rotated. In most cases, this small change in the radius of the coiled fiber assembly will not adversely affect measurement accuracy. By heat treating fiber assemblies, it is possible to make low-cost cables that naturally coil into the desired geometry, thereby simplifying production and increasing reliability.

Second Embodiment

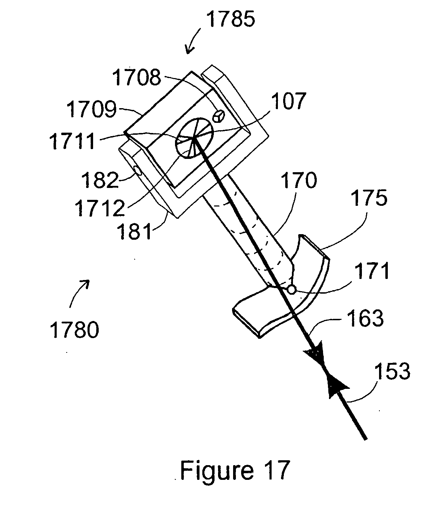

The second embodiment of the invention is generally similar to that shown in Figure 1 except for the probe assembly 180 is replaced by probe assembly 1780, as shown in Figure 17. Probe assembly 1780 contains a single small retroreflector 1708 to the side of retroreflector 107. Retroreflector 1708 is approximately aligned with the first line of intersection. At the start of the measurement, the photosensitive array 725 of Figure 7 displays a pattern similar to that of Figure 12, with the details of the pattern dependant on the pitch, yaw, and roll angles of retroreflector 107. As explained previously, at the start of the measurement, it is not possible to tell which line segments correspond to each of the three lines of intersection. To resolve this ambiguity, the tracker performs a search in which it directs laser beam 153 in succession to each of the six possible locations of retroreflector 1708. A flash of light on position detector 341 of Figure 3 indicates that the first line of intersection has been identified. Also on probe assembly 1780, two thin wires 1711 and 1712 have been stretched across the top of retroreflector 107. Additional thin wires or alternative shapes may also be used. These wires provide redundant information for determining the pitch, yaw, and roll angles for those cases in which accuracy is more important than measurement speed.

Probe assemblies 180 and 1780 can be used in either a scanning mode or a trigger mode. In the scanning mode, probe tip 171, shown in Figures 1 and 17, is moved across the surface of the object under evaluation 175 while data is continually collected at a high rate. In the trigger mode, probe 180 or 1780 is moved successively to the points of interest. When the probe is properly positioned, the operator triggers the measurement by performing an action such as pressing a button or issuing a voice command.

Either target object 185 in the first preferred embodiment or target object 1785 in the second preferred embodiment can be detached from adjustable stage 181 and probe shaft 170, then attached to the end effector of a robot arm. Alternatively, the target object can be attached to a machine tool such as a drilling or milling machine. The tracker sends a laser beam to the target object to determine the six degrees of freedom of the drill or mill. The information provided by the tracker on the six degrees of freedom of target object 185 or 1785 can be used in a control loop to precisely direct the machine tool or robot end effector to the desired locations. If the tracker measures the six degrees of freedom fast enough, real-time control of machine tools and robots is possible.

Laser tracker (not covered by the claims).

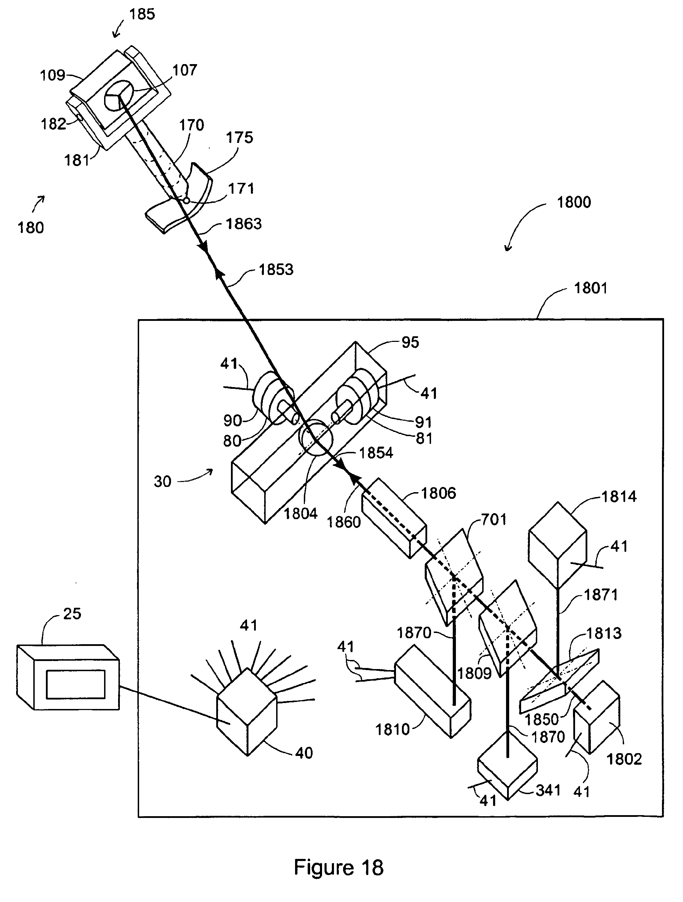

A conventional laser tracker 1800 as shown in Figure 18 uses a steering reflector 1804 within gimbal mount 95 to direct laser beam 1853 to retroreflector 107. Laser 1802 emits laser light that is sent to retroreflector 107. Optical block 1806 contains beam expander 220 and any other optical beam-conditioning elements that may be required. Laser light returning from retroreflector 107 is sent to distance-measuring device 1814, which may be either an absolute-distance meter or an incremental-distance meter. Part of the returning laser light is also reflected off beam splitter 1809 to position detector 341. The beam splitter 701 reflects a portion of laser beam 54 into orientation-camera subsystem 1810. Orientation camera subsystem 1810 comprises afocal lens block 710 and relay/array block 720, also shown in Figure 7. The optical elements within blocks 1806 and 1810 of Figure 18 are substantially equivalent to the optical elements within blocks 220 and 210 of Figures 6 and 7. In effect, an orientation camera comprising elements 701 and 1810 is embedded within laser tracker 1800. This orientation camera is equivalent to the orientation camera 210 of Figure 2 and can therefore be used to measure the six degrees of freedom of target object 185.

It will be apparent to those skilled in the art that various modifications and variations can be made in the laser-based coordinate measuring device of the present invention without departing from the scope of the invention. Thus, it is intended that the present invention covers the modifications and variations of this invention provided they come within the scope of the appended claims.

**Claims**

1.   A laser based measuring device for measuring a position of a remote target, the measuring device comprising:

> a stationary portion (101) having at least a first laser radiation source (102, 103, 104) and at least a first optical detector;
> a rotatable portion (190) that is rotatable with respect to the stationary portion; a first motor (80) disposed to rotate the rotatable portion (190) about a first axis; and
> at least a first optical fiber system (112,305,306) for optically interconnecting the first laser radiation source and the first optical detector with an emission end (301) of an optical fiber (306) of the first optical fiber system (112, 305, 305), the emission end (301) of the optical fiber (306) for emitting laser radiation (153) to the remote target (185) and for receiving laser radiation (163) reflected from the remote target (185); wherein
> the emission end (301) of the optical fiber (306) is disposed on the rotatable portion (190) and emission direction of the laser radiation is controlled according to the rotation of the rotatable portion (190).

2.   The laser based measuring device (100) according to claim 1, wherein the first optical fiber system includes at least first, second, and third optical fibers (308, 309, 306) and a coupler assembly (305), the first optical fiber (115) for directing light to the rotatable portion (190) from the laser radiation source, the second optical fiber (308, 309) for directing light from the rotatable portion (190) to the optical detector, and the third optical fiber (306) having the emission end (301) and coupled to the first and second optical fibers (308, 309) by the coupler assembly 305.

3.   The laser based measuring device according to claim 2, wherein the coupler assembly (305) is disposed on one of the rotatable portion (90) and the stationary portion (101).

4.   The laser based measuring device according to any preceding claim, wherein three dimensions of position and three dimensions of orientation corresponding to the remote target are determined.

5.   The laser based measuring device according to claim 1, further comprising a second laser radiation source (102) disposed on the stationary portion and a second optical fiber system (111) for optically interconnecting the second laser radiation source (102) and the rotatable portion (190), a wavelength of second laser radiation source being different than a wavelength of the first laser radiation source.

6.   The laser based measuring device according to claim 5, further comprising a beam combiner (200) disposed on the rotatable portion (190) for receiving and combining laser radiation emitted from the first and second optical fiber systems into a substantially single composite beam.

7.   The laser based measuring device according to claim 6, wherein the beam combiner (200) includes at least one beam splitter (314), the laser radiation from one of the first and second optical fiber systems incident from a first side of the beam splitter (341) and being transmitted through the beam splitter (341), and the laser radiation from the other one of the first and second optical fiber systems incident from a second side of the beam splitter (341) and being reflected off the beam splitter (341) to become combined with the laser radiation from the first optical fiber system transmitted through the beam splitter (341).

8.   The laser based measuring device according to claim 7, wherein the laser radiation reflected from the target (185) is incident from the second side of the beam splitter (341) so as to be split into a first portion having the first wavelength that is transmitted through the beam splitter (341) to the first optical fiber system and a second portion having the second wavelength that is reflected to the second optical fiber system.

9.   The laser based measuring device according to any preceding claim, further comprising a beam expander 220 to expand the diameter of a beam including the laser radiation from the first optical fiber system.

10. The laser based measuring device according to any preceding claim , wherein the remote target (185) includes a retroreflector (107).

11. The laser based measuring device according to claim 10, further comprising a position detector (341) for detecting a position of the emitted laser radiation relative to the retroreflector (107).

12. The laser based measuring device according to claim 11, further comprising an actuator for controlling the rotation of the rotatable portion (190) in accordance with a result of the position detector (341).

13. The laser based measuring device according to any preceding claim , further comprising a first angular encoder (90) to measure the rotation of the rotatable portion (190) about the first axis, a second motor (81) disposed to rotate the rotatable portion (190) about a second axis, and a second angular encoder (91) to measure the rotation of the rotatable portion (190) about the first axis, wherein the first and second axes are substantially orthogonal with respect to each other.

14. The laser based measuring device according to claim 13, wherein a first portion of the first optical fiber system is disposed along the first axis and a second portion of the first optical fiber system is disposed along the second axis.

15. The laser based measuring device according to claim 14, wherein the first portion allows rotation along the first axis without disturbing signals carried by the fiber system and the second portion allows rotation along the second axis without disturbing signals carried by the first optical fiber system.

16. The laser based measuring device according to any preceding claim, wherein the first optical detector is a part of an absolute distance meter (103).

17. The laser based measuring device according to claim 16, further comprising an incremental distance meter.

18. The laser based measuring device according to any of claims 1 to 15, wherein the first optical detector is a part of an incremental distance meter.

19. The laser based measuring device according to any preceding claim, further comprising a locator camera (230) to determine an approximate position of the remote target (185) so that the rotatable portion (190) can be oriented to direct the laser radiation to the remote target (185).

20. The laser based measuring device according to any preceding claim, further comprising an orientation camera (210) to determine the orientation of the remote target (185).

21. A laser based method for measuring coordinates of a remote retroreflective target, **characterised by** the steps of:

coupling laser radiation into a first end of an optical fiber (306), the optical fiber (306) having a second end disposed on a rotatable structure;
controlling the rotation of the rotatable structure (190) to direct the laser radiation from the second end to the remote retroreflective target (185);
coupling a first portion of retroreflected laser radiation with an orientation camera (210) arranged to determine the orientation of the remote target;
coupling a second portion of the retroreflected laser radiation with a distance meter (103); and
calculating three positional and three orientational degrees of freedom of the remote retroreflective target.

22. The method according to claim 21, wherein the controlling step includes the steps of rotating the rotatable structure about two substantially orthogonal axes and measuring an amount of rotation about each axis with angular encoders (90, 91).

23. The method according to claim 21 or 22, further comprising the step of receiving the second portion of the retroreflected light into the second end.

**Patentansprüche**

1. Laserbasierte Messvorrichtung zum Messen einer Position eines entfernten Ziels, wobei die Messvorrichtung enthält:

   einen stationären Abschnitt (101) mit wenigstens einer ersten Laserstrahlungsquelle (102, 103, 104) und wenigstens einem ersten optischen Detektor;
   einen drehbaren Abschnitt (190), der in Bezug auf den stationären Abschnitt drehbar ist;
   einen ersten Motor (80), der angeordnet ist, um den drehbaren Abschnitt (190) um eine erste Achse zu drehen; und
   wenigstens ein erstes Lichtleitfasersystem (112, 305, 306), um die erste Laserstrahlungsquelle und den ersten optischen Detektor mit einem Emissionsende (301) einer Lichtleitfaser (306) des ersten Lichtleitfasersystems (112, 305, 306) optisch zu verbinden, wobei das Emissionsende (301) der Lichtleitfaser (306) zum Emittieren von Laserstrahlung (153) zu dem entfernten Ziel (185) und zum Empfangen von Laserstrahlung (163), die von dem entfernten Ziel (185) reflektiert wird, dient; wobei
   das Emissionsende (301) der Lichtleitfaser (306) auf dem drehbaren Abschnitt (190) angeordnet ist und eine Emissionsrichtung der Laserstrahlung in Übereinstimmung mit bzw. entsprechend der Drehung des drehbaren Abschnitts (190) gesteuert wird.

2. Laserbasierte Messvorrichtung (100) nach Anspruch 1, wobei das erste Lichtleitfasersystem wenigstens erste, zweite und dritte Lichtleitfasern (308, 309, 306) und eine Koppleranordnung (305) enthält, wobei die erste Lichtleitfaser (115) dazu dient, Licht von der Laserstrahlungsquelle zu dem drehbaren Abschnitt (190) zu richten, die zweite Lichtleitfaser (308, 309) dazu dient, Licht von dem drehbaren Abschnitt (190) zu dem optischen Detektor zu richten, und die dritte Lichtleitfaser (306) das Emissionsende (301) besitzt und mit der ersten und der zweiten Lichtleitfaser (308, 309) durch die Koppleranordnung (305) gekoppelt ist.

3. Laserbasierte Messvorrichtung nach Anspruch 2, wobei die Koppleranordnung (305) entweder an dem drehbaren Abschnitt (90) oder an dem stationären Abschnitt (101) angeordnet ist.

4. Laserbasierte Messvorrichtung nach einem vorhergehenden Anspruch, wobei eine dreidimensionale Position und eine dreidimensionale Orientierung, die dem entfernten Ziel entsprechen, bestimmt werden.

5. Laserbasierte Messvorrichtung nach Anspruch 1, die ferner eine zweite Laserstrahlungsquelle (102), die an dem stationären Abschnitt angeordnet ist, und ein zweites Lichtleitfasersystem (111), um die zweite Laserstrahlungsquelle (102) und den drehbaren Abschnitt (190) optisch zu verbinden, enthält, wobei eine Wellenlänge der zweiten Laserstrahlungsquelle von einer Wellenlänge der ersten Laserstrahlungsquelle verschieden ist.

6. Laserbasierte Messvorrichtung nach Anspruch 5, die ferner einen Strahlkombinierer (200) enthält, der an dem drehbaren Abschnitt (190) angeordnet ist, um Laserstrahlung, die von dem ersten und von dem zweiten Lichtleitfasersystem emittiert wird, zu empfangen und zu einem im Wesentlichen einzigen zusammengesetzten Strahl zu kombinieren.

7. Laserbasierte Messvorrichtung nach Anspruch 6, wobei der Strahlkombinierer (200) wenigstens einen Strahlteiler (314) enthält, wobei die Laserstrahlung von dem ersten oder dem zweiten Lichtleitfasersystem von einer ersten Seite des Strahlteilers (341) auftrifft und durch den Strahlteiler (341) durchgelassen wird und die Laserstrahlung von dem Anderen des ersten und des zweiten Lichtleitfasersystems von einer zweiten Seite des Strahlteilers (341) auftrifft und von dem Strahlteiler (341) reflektiert wird, um mit der Laserstrahlung von dem ersten Lichtleitfasersystem, die durch den Strahlteiler (341) durchgelassen wird, kombiniert zu werden.

8. Laserbasierte Messvorrichtung nach Anspruch 7, wobei die von dem Ziel (185) reflektierte Laserstrahlung von der zweiten Seite des Strahlteilers (341) auftrifft, um in einen ersten Anteil mit der ersten Wellenlänge, der durch den Strahlteiler (341) zu dem ersten Lichtleitfasersystem durchgelassen wird, und in einen zweiten Anteil mit der zweiten Wellenlänge, der zu dem zweiten Lichtleitfasersystem reflektiert wird, aufgeteilt zu werden.

9. Laserbasierte Messvorrichtung nach einem vorhergehenden Anspruch, die ferner einen Strahlerweiterer (220) enthält, um den Durchmesser eines Strahls, der die Laserstrahlung von dem ersten Lichtleitfasersystem enthält, zu erweitern.

10. Laserbasierte Messvorrichtung nach einem vorhergehenden Anspruch, wobei das entfernte Ziel (185) einen Retroreflektor (107) enthält.

11. Laserbasierte Messvorrichtung nach Anspruch 10, die ferner einen Positionsdetektor (341) enthält, um eine Position der emittierten Laserstrahlung relativ zu dem Retroreflektor (107) zu detektieren.

12. Laserbasierte Messvorrichtung nach Anspruch 11, die ferner einen Aktor enthält, um die Drehung des drehbaren Abschnitts (190) in Übereinstimmung mit einem Ergebnis des Positionsdetektors (341) zu steuern.

13. Laserbasierte Messvorrichtung nach einem vorhergehenden Anspruch, die ferner einen ersten Drehgeber (90), um die Drehung des drehbaren Abschnitts (190) um die erste Achse zu messen, einen zweiten Motor (81), der angeordnet ist, um den drehbaren Abschnitt (190) um eine zweite Achse zu drehen, und einen zweiten Drehgeber (91), um die Drehung des drehbaren Abschnitts (190) um die erste Achse zu messen, enthält, wobei die erste und die zweite Achse im Wesentlichen zueinander senkrecht sind.

14. Laserbasierte Messvorrichtung nach Anspruch 13, wobei ein erster Abschnitt des ersten Lichtleitfasersystems längs der ersten Achse angeordnet ist und ein zweiter Abschnitt des ersten Lichtleitfasersystems längs der zweiten Achse angeordnet ist.

15. Laserbasierte Messvorrichtung nach Anspruch 14, wobei der erste Abschnitt eine Drehung längs der ersten Achse ohne Störung von Signalen, die durch das Fasersystem befördert werden, zulässt und der zweite Abschnitt eine Drehung längs der zweiten Achse ohne Störung von Signalen, die durch das erste Lichtleitfasersystem befördert werden, zulässt.

16. Laserbasierte Messvorrichtung nach einem vorhergehenden Anspruch, wobei der erste optische Detektor ein Teil eines Absolutabstandsmessers (103) ist.

17. Laserbasierte Messvorrichtung nach Anspruch 16, die ferner einen inkrementellen Abstandsmesser enthält.

18. Laserbasierte Messvorrichtung nach einem der Ansprüche 1 bis 15, wobei der erste optische Detektor ein Teil eines inkrementellen Abstandsmessers ist.

19. Laserbasierte Messvorrichtung nach einem vorhergehenden Anspruch, die ferner eine Lokalisierungskamera (230) enthält, um eine ungefähre Position des entfernten Ziels (185) zu bestimmen, so dass der drehbare Abschnitt (190) orientiert werden kann, um die Laserstrahlung zu dem entfernten Ziel (185) zu richten.

20. Laserbasierte Messvorrichtung nach einem vorhergehenden Anspruch, die ferner eine Orientierungskamera (210) enthält, um die Orientierung des entfernten Ziels (185) zu bestimmen.

21. Laserbasiertes Verfahren zum Messen von Koordinaten eines entfernten retroreflektierenden Ziels, **gekennzeichnet durch** die folgenden Schritte:

Koppeln von Laserstrahlung in ein erstes Ende einer Lichtleitfaser (306), wobei die Lichtleitfaser (306) ein zweites Ende besitzt, das an einer drehbaren Struktur angeordnet ist;
Steuern der Drehung der drehbaren Struktur (190), um die Laserstrahlung von dem zweiten Ende zu dem entfernten retroreflektierenden Ziel (185) zu richten;
Koppeln eines ersten Anteils retroreflektierter Laserstrahlung mit einer Orientierungskamera (210), die dazu ausgelegt ist, die Orientierung des entfernten Ziels zu bestimmen;
Koppeln eines zweiten Anteils der retroreflektierten Laserstrahlung mit einem Abstandsmesser (103); und
Berechnen von drei Positions- und von drei Orientierungs-Freiheitsgraden des entfernten retroreflektierenden Ziels.

22. Verfahren nach Anspruch 21, wobei der Steuerschritt die Schritte des Drehens der drehbaren Struktur um zwei im Wesentlichen zueinander senkrechte Achsen und des Messens eines Drehbetrags um jede Achse mit Drehgebern (90, 91) umfasst.

23. Verfahren nach Anspruch 21 oder 22, das ferner den Schritt des Empfangens des zweiten Anteils des retroreflektierten Lichts in dem zweiten Ende umfasst.

**EP 1 466 136 B1**

**Revendications**

1. Dispositif de mesure par laser destiné à mesurer la position d'une cible distante, le dispositif de mesure comprenant :

   une partie fixe (101) ayant au moins une première source de rayonnement laser (102, 103, 104) et au moins un premier détecteur optique ;
   une partie tournante (190) qui peut tourner par rapport à la partie fixe ;
   un premier moteur (80) disposé de façon à faire tourner la partie tournante (190) autour d'un premier axe ; et
   au moins un premier système à fibres optiques (112, 305, 306) destiné à interconnecter optiquement la première source de rayonnement laser et le premier détecteur optique à une extrémité émettrice (301) d'une fibre optique (306) du premier système à fibres optiques (112, 305, 306), l'extrémité émettrice (301) de la fibre optique (306) étant destinée à émettre un rayonnement laser (153) vers la cible distante (185) et
   à recevoir un rayonnement laser (163) réfléchi par la cible distante (185) ; dans lequel
   l'extrémité émettrice (301) de la fibre optique (306) est disposée sur la partie tournante (190) et une direction d'émission du rayonnement laser est commandée en fonction de la rotation de la partie tournante (190).

2. Dispositif de mesure par laser (100) selon la revendication 1, dans lequel le premier système à fibres optiques comprend au moins des première, deuxième et troisième fibres optiques (308, 309, 306) et un ensemble coupleur (305), la première fibre optique (115) étant destinée à diriger la lumière vers la partie tournante (190) depuis la source de rayonnement laser, la deuxième fibre optique (308, 309) étant destinée à diriger la lumière provenant de la partie tournante (190) vers le détecteur optique, et la troisième fibre optique (306) ayant l'extrémité émettrice (301) et étant couplée aux première et deuxième fibres optiques (308, 309) par l'ensemble coupleur (305).

3. Dispositif de mesure par laser selon la revendication 2, dans lequel l'ensemble coupleur (305) est disposé sur l'une de la partie tournante (90) et de la partie fixe (101).

4. Dispositif de mesure par laser selon l'une quelconque des revendications précédentes, dans lequel on détermine trois dimensions de position et trois dimensions d'orientation correspondant à la cible distante.

5. Dispositif de mesure par laser selon la revendication 1, comprenant en outre une deuxième source de rayonnement laser (102) disposée sur la partie fixe et un deuxième système à fibres optiques (111) destiné à interconnecter optiquement la deuxième source de rayonnement laser (102) à la partie tournante (190), une longueur d'onde de la deuxième source de rayonnement laser étant différente d'une longueur d'onde de la première source de rayonnement laser.

6. Dispositif de mesure par laser selon la revendication 5, comprenant en outre un combineur de faisceaux (200) disposé sur la partie tournante (190) pour recevoir et combiner les rayonnements laser émis par les premier et deuxième systèmes à fibres optiques en un faisceau composite sensiblement unique.

7. Dispositif de mesure par laser selon la revendication 6, dans lequel le combineur de faisceaux (200) comprend au moins un diviseur de faisceaux (314), le rayonnement laser provenant de l'un des premier et deuxième systèmes à fibres optiques étant incident depuis un premier côté du diviseur de faisceaux (341) et étant transmis à travers le diviseur de faisceaux (341), et le rayonnement laser provenant de l'un des premier et deuxième systèmes à fibres optiques étant incident depuis un deuxième côté du diviseur de faisceaux (341) et étant réfléchi par le diviseur de faisceaux (341) afin de se combiner au rayonnement laser provenant du premier système à fibres optiques et transmis à travers le diviseur de faisceaux (341).

8. Dispositif de mesure par laser selon la revendication 7, dans lequel le rayonnement laser réfléchi par la cible (185) est incident depuis le deuxième côté du diviseur de faisceaux (341) de façon à ce qu'il soit divisé en une première partie à la première longueur d'onde qui est transmise à travers le diviseur de faisceaux (341) vers le premier système à fibres optiques et en une deuxième partie à la deuxième longueur d'onde qui est réfléchie par le deuxième système à fibres optiques.

9. Dispositif de mesure par laser selon l'une quelconque des revendications précédentes, comprenant en outre un élargisseur de faisceau (220) destiné à augmenter le diamètre d'un faisceau comprenant le rayonnement laser provenant du premier système à fibres optiques.

10. Dispositif de mesure par laser selon l'une quelconque des revendications précédentes, dans lequel la cible distante

**18**

(185) comprend un rétro-réflecteur (107).

11. Dispositif de mesure par laser selon la revendication 10, comprenant en outre un détecteur de position (341) destiné à détecter une position du rayonnement laser émis par rapport au rétro-réflecteur (107).

12. Dispositif de mesure par laser selon la revendication 11, comprenant en outre un actionneur destiné à commander la rotation de la partie tournante (190) en fonction d'un résultat du détecteur de position (341).

13. Dispositif de mesure par laser selon l'une quelconque des revendications précédentes, comprenant en outre un premier codeur angulaire (90) destiné à mesurer la rotation de la partie tournante (190) autour du premier axe, un deuxième moteur (81) disposé de manière à faire tourner la partie tournante (190) autour d'un deuxième axe, et un deuxième codeur angulaire (91) destiné à mesurer la rotation de la partie tournante (190) autour du premier axe, les premier et deuxième axes étant sensiblement orthogonaux l'un par rapport à l'autre.

14. Dispositif de mesure par laser selon la revendication 13, dans lequel une première partie du premier système à fibres optiques est disposée le long du premier axe et une deuxième partie du premier système à fibres optiques est disposée le long du deuxième axe.

15. Dispositif de mesure par laser selon la revendication 14, dans lequel la première partie permet une rotation suivant le premier axe sans perturber les signaux acheminés par le système à fibres optiques et la deuxième partie permet une rotation suivant le deuxième axe sans perturber les signaux acheminés par le premier système à fibres optiques.

16. Dispositif de mesure par laser selon l'une quelconque des revendications précédentes, dans lequel le premier détecteur optique fait partie d'un dispositif de mesure de distance absolue (103).

17. Dispositif de mesure par laser selon la revendication 16, comprenant en outre un dispositif de mesure de distance incrémentale.

18. Dispositif de mesure par laser selon l'une quelconque des revendications 1 à 15, dans lequel le premier détecteur optique fait partie d'un dispositif de mesure de distance incrémentale.

19. Dispositif de mesure par laser selon l'une quelconque des revendications précédentes, comprenant en outre une caméra de localisation (230) destinée à déterminer une position approximative de la cible distante (185) afin que la partie tournante (190) puisse être orientée de manière à diriger le rayonnement laser vers la cible distante (185).

20. Dispositif de mesure par laser selon l'une quelconque des revendications précédentes, comprenant en outre une caméra d'orientation (210) destinée à déterminer l'orientation de la cible distante (185).

21. Procédé à base de laser destiné à mesurer les coordonnées d'une cible rétro-réfléchissante distante, **caractérisé par** les étapes consistant à :

   injecter un rayonnement laser dans une première extrémité d'une fibre optique (306), la fibre optique (306) ayant une deuxième extrémité disposée sur une structure tournante ;
   commander la rotation de la structure tournante (190) afin de diriger le rayonnement laser de la deuxième extrémité vers la cible rétro-réfléchissante distante (185) ;
   appliquer une première partie du rayonnement laser rétro-réfléchi à une caméra d'orientation (210) conçue pour déterminer l'orientation de la cible distante ;
   appliquer une deuxième partie du rayonnement laser rétro-réfléchi à un dispositif de mesure de distance (103) ; et
   calculer trois degrés de liberté en position et en orientation de la cible rétro-réfléchissante distante.

22. Procédé selon la revendication 21, dans lequel l'étape de commande comprend les étapes consistant à faire tourner la structure tournante autour de deux axes sensiblement orthogonaux et à mesurer une distance de rotation autour de chaque axe au moyen de codeurs angulaires (90, 91).

23. Procédé selon la revendication 21 ou 22, comprenant en outre l'étape consistant à recevoir la deuxième partie de la lumière rétro-réfléchie à la deuxième extrémité.

Figure 1

Figure 2

EP 1 466 136 B1

EP 1 466 136 B1

Figure 3

Figure 4

Figure 5

220

601

251

651

602

153

163

Figure 6

210

701

750

251

741

711

710

742

41

728

751

41

743

721

722

744

720

723

724

744

753

752

725

714

712

Figure 7

PERSPECTIVE VIEW
Figure 8a

FRONT VIEW
Figure 8b

PERSPECTIVE VIEW
Figure 9a

FRONT VIEW
Figure 9b

PERSPECTIVE VIEW

Figure 10a

FRONT VIEW

Figure 10b

PERSPECTIVE VIEW

Figure 11a

FRONT VIEW

Figure 11b

Figure 12

Figure 13

Figure 14a

Figure 14b

Figure 15a

Figure 15b

Figure 15c

Figure 16

Figure 17

Figure 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4790651 A, Brown
- US 4714339 A, Lau
- US 5059789 A, Salcudean
- US 5367373 A, Busch-Vishniac
- US 5973788 A, Pettersen
- US 5267014 A, Prenninger
- US 4020340 A, Cooke
- US 4025193 A, Pond
- US 4386848 A, Clendenin
- US 4436417 A, Hutchin
- US 4457625 A, Greenleaf
- US 4721385 A, Jelalian
- DE 3205362 A1, Pfeifer
- US 4459022 A, Morey
- US 5095472 A, Uchino
- US 5198874 A, Bell
- US 5200838 A, Nudelman
- US 5402230 A, Tian
- US 5508804 A, Furstenau
- US 5557406 A, Taylor
- GB 2285550 A

**Non-patent literature cited in the description**

- **Lucy et al.** *Applied Optics,* 1966, 517-524
- **Bernard ; Fencil.** *Applied Optics,* 1966, 497-505
- **Sullivan.** *SPIE,* 1980, vol. 227, 148-161
- **Nakamura et al.** *Review of Scientific Instruments,* 1994, 1006-1011
- **Takatsuji et al.** *Measurement Science & Technology,* 1998, 38-41
- **Takatsuji et al.** *Measurement Science & Technology,* 1998, 1357-1359
- Dimensional Metrology in the 21s1 Century. **Takatsuji et al.** International Dimensional Metrology Workshop sponsored. Oak Ridge Metrology Center, 10 May 1999